(19) Europäisches Patentamt
European Patent Office
Office européen des brevets

(11) **EP 3 441 782 B1**

(12) **EUROPEAN PATENT SPECIFICATION**

(45) Date of publication and mention
of the grant of the patent:
**24.02.2021 Bulletin 2021/08**

(51) Int Cl.:
***G01S 5/02*** *(2010.01)*

(21) Application number: **17186016.6**

(22) Date of filing: **11.08.2017**

(54) **LOCALIZATION BASED ON AN ELECTROMAGNETIC MULTIPATH DELAY PROFILE**

LOKALISIERUNG BASIEREND AUF EINEM ELEKTROMAGNETISCHEN MEHRWEGVERZÖGERUNGSPROFIL

LOCALISATION BASÉE SUR UN PROFIL DE RETARD MULTITRAJET ÉLECTROMAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.02.2019 Bulletin 2019/07**

(73) Proprietor: **Technische Universität München 80333 München (DE)**

(72) Inventors:
• **STEINBACH, Eckehard 82140 Olching (DE)**
• **ZAYETS, Alexandra 81825 München (DE)**

(74) Representative: **Kretschmann, Dennis Boehmert & Boehmert Anwaltspartnerschaft mbB Pettenkoferstrasse 22 80336 München (DE)**

(56) References cited:
**EP-A1- 2 934 052      US-A1- 2010 309 051
US-A1- 2013 324 158      US-A1- 2014 301 511**

## Description

Field of the Invention

The invention relates to methods and systems for localization based on electromagnetic signals, in particular methods and systems for indoor localization, such as in factory halls, shopping malls, or airports.

Background

As the capabilities of mobile devices and the indoor data communication infrastructure advance, the application possibilities and potential of indoor localization systems (ILS) grow. Possible applications of indoor localization include user localization in public buildings, such as shopping malls or airports, and the localization of industrial equipment in production sites and warehouses. Unfortunately, conventional outdoor localization technologies are oftentimes unsuitable for indoor use. For instance, global positioning system (GPS) signals undergo significant attenuation and signal distortion in an indoor environment.

To date, various technologies have been proposed that can locate receivers in an indoor environment. These include systems using cameras, infrared signals, magnetic fields, or sound. Wi-Fi-based ILS come with the advantage that in most indoor environments, no additional infrastructure needs to be installed. Most buildings are already equipped with multiple Wi-Fi access points (AP), and most portable devices have a built-in Wi-Fi module. Most existing Wi-Fi-based localization algorithms may be categorized into two groups: Trilateration/triangulation and fingerprinting. Trilateration and triangulation-based algorithms estimate the distances to the access points by measuring a time-of-flight or angle-of-arrival of a signal. However, they only work reliably in a line-of-sight (LOS) environment. Moreover, given that Wi-Fi signals propagate with the speed of light, even tiny measurement or synchronization errors can result in localization errors up to tens of meters.

Fingerprinting-based ILS is a two-step process. In a first step, measurements of electromagnetic signals such as Wi-Fi signals are collected on a predefined grid in the indoor environment. The measured data is stored in a map. This is called the offline phase or training phase. Subsequently, in the online or run-time phase, a receiver performs electromagnetic measurements and matches them to the map generated in the first step.

Fingerprinting-based Wi-Fi localization is described in additional detail in F. Lemic et al., "Experimental Decomposition of the Performance of Fingerprinting-Based Localization Algorithms", 2014 International Conference on Indoor Positioning and Indoor Navigation (IPIN), October 2014, pages 355-364. The most commonly used fingerprint is the received signal strength indicator (RSSI), which corresponds to the received power in dB of a signal that is averaged over a certain sampling period. One of the most commonly-used models has been described by D. Bartlet, "Essentials of Positioning and Location Technology", Cambridge University Press 2013. Although to date, these methods are the most prominent in literature, they still suffer from several drawbacks. For instance, RSSI signals are highly sensitive to changes in the environment, e.g., movement of people and opening of doors. Map construction, which is a time-consuming process, hence needs to be repeated whenever structural changes occur in the environment. Moreover, RSSI tends to fluctuate significantly over time.

US 2010/0309051 A1 describes the localization of a mobile device through a comparison of measured electromagnetic multipath delay profiles with a database of pre-stored profiles obtained by measuring the multipath profiles at known positions in an environment with one or more emitters of electromagnetic signals.

EP 2934052 A1 discloses a method for localizing a device in a wireless network, which relies on the determination of channel impulse responses and a subsequent comparison to a database with predetermined responses at known reference positions using a pattern matching technique.

In US 2013/0324158 A1, a localization method for devices is described that is based on a localization signal inserted into the header of a mobile broadcast signal, from which location parameters can be extracted and compared with a database.

US 2014/0301511 A1 introduces a method for determining fingerprints for multipath signals, which can be used to identify the location of an emitter. A fingerprint for a signal from a given location is determined by also taking into account the multipath signals associated with other locations to facilitate the distinction between fingerprints corresponding to different locations.

In view of these problems, what is needed are improved techniques for reliable, robust indoor localization.

Overview of the Invention

This objective is achieved with the tracking methods according to claim 1 and 4, as well as a corresponding computer program according to claim 10 , a server system according to claim 11, and a client system according to claim 13.

The dependent claims relate to preferred embodiments.

A method for generating a localization map comprises receiving, at a first location, a first electromagnetic signal corresponding to a first plurality of propagation paths between at least one electromagnetic emitter and said first location; and extracting, from said first electromagnetic signal, a first plurality of propagation components corresponding to said first plurality of propagation paths. The method further comprises receiving, at a second location different from said first location, a second electromagnetic signal corresponding to a second plurality of propagation paths between said at least one electromagnetic emitter and said second location; and extracting, from said second electromagnetic signal, a second plurality of propagation components corresponding to said second plurality of propagation paths. The method further comprises associating said first plurality of propagation components with said first location and said second plurality of propagation components with said second location, in particular in a database.

The inventors realized that a robust localization may advantageously be based on an electromagnetic multipath delay profile (MDP). By extracting propagation components corresponding to different propagation paths from an electromagnetic signal emitted by an electromagnetic emitter at various locations, a localization map may be obtained in which propagation components are associated with said respective locations. This map may then be used for subsequent fingerprinting, such as by a comparison of extracted propagation components at an unknown location with the propagation components pre-stored in the map.

The inventors found that these techniques are not only more stable over time than conventional approaches, but also more robust to changes in the environment. Changes in the environment may involve the opening/closing of doors, or the movement of people and/or objects through the environment, which may lead to changes in the propagation paths, channel impulse response and/or received power.

In the context of the present disclosure, the electromagnetic emitter may refer to any device adapted to emit electromagnetic signals. For instance, an access point of a Wi-Fi network installed in a building may be an electromagnetic emitter in the sense of the present disclosure. In general, a plurality of (possibly a large number of) electromagnetic emitters, such as Wi-Fi access points, may be distributed across an environment, and may allow to generate a map based on measuring responses of the electromagnetic emitters. The emitters may respond to signals received from a probe device, such as trigger signals or handshake signals.

Different electromagnetic emitters may emit at different frequencies, or may emit a signal that contains an identifier allowing said electromagnetic emitter to be identified. The received propagation components may then be distinguished in terms of the electromagnetic emitter from which the corresponding electromagnetic signal originates, which assists in increasing the accuracy of the map generation.

In an embodiment, the method hence comprises a step of identifying, from said first electromagnetic signal and/or said second electromagnetic signal, an identity of said at least one electromagnetic emitter; and associating a set of propagation components among said first plurality of propagation components and/or among said second plurality of propagation components with said identity of said at least one electromagnetic emitter.

Said set of propagation components associated with said identity of said at least one electromagnetic emitter may be a set of all extracted propagation components, or may be a subset, or may be an empty set.

It is another advantage of the techniques according to the invention that the extracted propagation components can be used for interpolation to further enhance a spatial accuracy of the map.

Interpolation may comprise trilateration and/or triangulation.

In an example, the method comprises determining a third plurality of propagation components corresponding to a third location different from said first location and said second location, wherein said third plurality of propagation components is determined at least in part based on said first plurality of propagation components and said second plurality of propagation components, in particular by means of interpolation, which may involve trilateration and/or triangulation.

Optionally, said third plurality of propagation components may be based in addition on a further plurality of propagation components corresponding to a further location different from said first, second, and third locations.

In an example, the method may comprise assigning, in particular in said database, said first plurality of propagation components and said second plurality of propagation components to intervals of increasing values, in particular non-intersecting intervals of increasing values.

In an example, the ordering may not be limited to the electromagnetic emitters individually, but may occur across multiple emitters.

The inventors found that ordering the propagation components according to increasing values allows to enhance the computational efficiency of determining the best match for said propagation components in said map.

In addition, the techniques allow to iteratively update the similarity metric, in particular in terms of said intervals of said increasing values.

This may be particularly helpful when a user may require a rough positional estimate in a first step, which may need to be refined in a second (subsequent) step.

With the techniques according to the embodiment, the similarity metric may not need to be re-computed for the refinement. Rather, the partial results obtained in the rough estimate can be refined by proceeding with the calculation based on the similarity metric already calculated for the rough estimate.

The disclosure further relates to a tracking method, comprising receiving, at a location, an electromagnetic signal corresponding to a plurality of propagation paths of signals emitted from at least one electromagnetic emitter; extracting, from said electromagnetic signal, a plurality of propagation components corresponding to said plurality of propagation paths; providing said extracted propagation components for comparison with a plurality of pre-stored propagation components associated with a plurality of known locations; and receiving information pertaining to said location, said information being based on said comparison.

Said pre-stored propagation components may pertain to propagation components of a localization map generated according to a method with some or all of the features described above.

The location of a device, such as a wireless user device, may be determined based on a comparison of said extracted propagation components with propagation components pre-stored in the map.

In an embodiment, said tracking method comprises a step of comparing said propagation components with said plurality of pre-stored propagation components associated with said plurality of known locations; and/or determining said information pertaining to said location based on said comparison.

Alternatively, said extracted propagation components may be provided to an external computation device, such as a server, for comparison with said plurality of pre-stored propagation components at said server, and wherein said information pertaining to said location is received from said server.

In an embodiment, the method further comprises modifying or obscuring at least a part of said extracted propagation components; locally storing data relating to said modified or obscured propagation components; providing said modified or obscured propagation components to at least one server; receiving said information pertaining to said location from said at least one server; and determining said location based on said information received from said at least one server (40) and said locally stored data.

Said obscuring may involve randomly switching or permuting identities of said electromagnetic emitters, and/or may involve adding artificial (camouflage) propagation components.

Said modified or obscured propagation components may in some examples not allow said at least one server to fully identify or determine said location. Determining said location may require additional knowledge of said locally stored data relating to said modified or obscured propagation components, which may not be accessible to said server. This may efficiently protect the privacy of the user.

In an example, privacy protection may be achieved by sending different parts of the extracted propagation components to different servers. Each of the different servers may respond by providing location information compatible with the part of the extracted propagation component that the respective server received. But the partial information does not necessarily allow any one single server to determine the location. This may be achieved by combining the information received from the different servers. Assuming that the different servers do not collaborate, no single server may be able to locate a user, thereby resulting in increased privacy protection.

In a corresponding embodiment, a first part of said extracted propagation components are provided to a first server for comparison with said plurality of pre-stored propagation components at said first server; and wherein a first information pertaining to said location is received from said first server. A second part of said extracted propagation components may be provided to a second server for comparison with said plurality of pre-stored propagation components at said second server, wherein said second part is different from said first part and wherein said second server is different from said first server. A second information pertaining to said location may be received from said second server, and said location may be determined based on said first information and said second information.

Alternatively or additionally, privacy protection may be enhanced by extracting partial fingerprints and in addition generate artificial (camouflage) fingerprints, which may both be sent to a server, or to a plurality of difference servers. The server may be unable to identify which of the transmitted fingerprints corresponds to the location of the user, and which are artificial. The server may return a plurality of candidate locations based on the partial fingerprints, and the true location may be determined locally by the user. To avoid being tracked over time, the user may generate camouflage fingerprints in a way that gives the illusion of a natural movement pattern. The techniques of the present invention, which allow to extract and directly manipulate the propagation components, significantly simplifies the computation of camouflage movement patterns.

In an example, said tracking may hence comprise a step of selecting a subset of said extracted propagation components, wherein said subset comprises only a part of said extracted propagation components, and generating imaginary propagation components, and providing said subset of said extracted propagation components and said imaginary propagation components to an external computation device, such as a server, for comparison with said plurality of pre-stored propagation components at said server.

The method may further comprise generating said imaginary propagation components in accordance with an imaginary movement pattern.

Said subset of said extracted propagation components and said imaginary (generated) propagation components may be sent to a single external computation device, or to a plurality of external computation devices as described above.

The method may further comprise receiving, from said external computation device, said information pertaining to said location, and determining said location based on said information and on knowledge about said subset and/or said imaginary propagation components.

Alternatively, or additionally, for privacy enhancement, said extracted propagation components may be provided to a server without information pertaining to an identity of the electromagnetic emitters from which components were received. Without knowledge of the electromagnetic emitters, the location may be ambiguous. The server may then provide all locations compatible with the received components. Only the user may be able, based on his knowledge of the identity of the electromagnetic emitter from which signals were received, to determine the true location.

In a corresponding embodiment, at least a part of said extracted propagation components are provided to a server without information pertaining to an electromagnetic emitter corresponding to said propagation components, in particular without information pertaining to an identity of said electromagnetic emitter. Said information pertaining to said location may be received from said server. Said method may further comprise determining said location based on said information received from said server and said information pertaining to said electromagnetic emitter corresponding to said propagation components, in particular said information received from said server and said information pertaining to said identity of said electromagnetic emitter.

The tracking has been described above from the perspective of a client device to be tracked. However, as described above, some of the tracking steps may be relegated to a server device. The tracking method from the viewpoint of a server provides an independent aspect of the disclosure.

The invention hence also pertains to a tracking method comprising receiving, from a client, a plurality of propagation components corresponding to a plurality of propagation paths, said propagation components being extracted from an electromagnetic signal received by said client at a location from at least one electromagnetic emitter; comparing said received propagation components with a plurality of pre-stored propagation components associated with a plurality of known locations; determining information pertaining to said location of said client based on said comparison; and providing said information to said client.

Relegating the steps of comparing said received propagation components with said plurality of pre-stored propagation components, and determining localization information based on said comparison may save computational resources and memory sources at the client device. In particular, the client device may not necessarily need to store the entire localization map.

In an example, said tracking method further comprises determining said location of said client.

In particular, said location may be determined as a selected location from among said plurality of known locations, such as based on a degree of similarity of said extracted propagation components with said selected location.

In some or all of the methods described above, said comparison of said extracted propagation components with said plurality of pre-stored propagation components may comprise generating a plurality of similarity metrics corresponding to said plurality of known locations, and determining said location among said plurality of known locations based on a comparison of said similarity metrics.

The inventors found that the use of a plurality of similarity metrics corresponding to said plurality of known locations allows to infer a location of said client device quickly and computationally efficiently.

In particular, said similarity metrics may each be generated based on a comparison of said extracted propagation components with said plurality of pre-stored propagation components corresponding to said respective electromagnetic emitter.

Extracting said propagation components may comprise identifying a plurality of peaks or shapes corresponding to said plurality of propagation paths, both in the generation of the localization map and in the tracking. This allows to identify and extract said propagation components quickly and reliably.

In other examples, extracting said propagation components may comprise deep-learning algorithms.

In the context of the present disclosure, said propagation components may correspond to a time delay and/or a length of said corresponding propagation path.

In environments in which a signal speed of said signals traveling from the electromagnetic emitters to the probe locations is constant, a time delay and a length of the corresponding propagation path may amount to alternative and equivalent representations.

In some examples, said propagation components may comprise raw data values. In other examples, said propagation components may undergo preprocessing or conversion. For instance, time delays or path lengths may be stored in terms of absolute values, or in terms of relative values that reflect a difference with respect to a smallest value. In some embodiments, said electromagnetic signal may be a response or reply signal received in response to a trigger signal sent to said electromagnetic emitter. In particular, a probe device or client device may subsequently send trigger signals to each of the electromagnetic emitters in the environment, and may receive electromagnetic signals that are reply signals emitted by the corresponding electromagnetic emitters in response to the trigger signals.

In an embodiment, the method hence comprises emitting a trigger signal to said at least one electromagnetic emitter; wherein said electromagnetic signal is a reply signal emitted by said at least one electromagnetic emitter in response to said trigger signal.

Different electromagnetic emitters may be distinguished according to the reply signal, such as from a frequency of the reply signal and/or from identity data communicated as part of the reply signal.

In an embodiment, said electromagnetic signal may be received from a plurality of electromagnetic emitters, and said method may further comprise identifying, from said electromagnetic signal, an identity of an electromagnetic emitter among said plurality of electromagnetic emitters.

In an embodiment, said plurality of propagation paths comprise direct paths, such as non-reflected paths.

Alternatively, or additionally, said plurality of propagation paths may comprise reflected paths. Said reflected paths may correspond to signals reflected off buildings and/or walls within buildings.

Even if some of the propagation paths may be blocked or changed due to changes in the environment, other propagation paths may still be available, and may allow to reliably detect a location of a client device.

In an example, said at least one electromagnetic transmitter is a wireless transmitter.

Said at least one electromagnetic transmitter may be located inside a building, and/or said locations may be within a building.

The invention also relates to a computer program or to a computer program product comprising computer-readable instructions, such that said instructions, when read by a computer device, cause said computer device to implement a method with some or all of the features described above.

The invention further relates to a system for generating a localization map, comprising a receiver unit adapted to receive, at a first location, a first electromagnetic signal corresponding to a first plurality of propagation paths between at least one electromagnetic emitter and said first location, wherein said receiver is further adapted to receive, at a second location differing from said first location, a second electromagnetic signal corresponding to a second plurality of propagation paths between said at least one electromagnetic emitter and said second location.

Said system further comprises an extraction unit adapted to extract, from said electromagnetic signal, a first plurality of propagation components corresponding to said first plurality of propagation paths; wherein said extraction unit is further adapted to extract, from said second electromagnetic signal, a second plurality of propagation components corresponding to said second plurality of propagation paths.

Said system further comprises a map unit adapted to associate said first plurality of propagation components with said first location and said second plurality of propagation components with said second location, in particular in a database.

In an embodiment, said system may further comprise an identifying unit adapted to identify, from said first electromagnetic signal and/or said second electromagnetic signal, an identity of said at least one electromagnetic emitter, wherein said map unit is adapted to associate a set of propagation components among said first plurality of propagation components and/or among said second plurality of propagation components with said identity of said at least one electromagnetic emitter.

According to an embodiment, said system may further comprise an interpolation unit adapted to determine a third plurality of propagation components corresponding to a third location differing from said first location and said second location; wherein said third plurality of propagation components are determined at least in part based on said first plurality of propagation components and said second plurality of propagation components, and optionally a further plurality of propagation components corresponding to a further location differing from first, second, and third locations, in particular by means of interpolation, which may involve trilateration and/or triangulation.

In an example, said map unit may be adapted to assign, in particular in said database, said first plurality of propagation components and said second plurality of propagation components to intervals of increasing value. In particular, said map unit may be adapted to assign said first plurality of propagation components and said second plurality of propagation components to non-intersecting intervals of increasing values.

The invention further relates to a client system, comprising a client receiver unit adapted to receive, at a location, an electromagnetic signal corresponding to a plurality of propagation paths of signals emitted from at least one electromagnetic emitter; an extraction unit adapted to extract, from said electromagnetic signal, a plurality of propagation components corresponding to said plurality of propagation paths. Said client system is adapted to provide said extracted propagation components for comparison with a plurality of pre-stored propagation components associated with a plurality of known locations, wherein said client system is further adapted to receive information pertaining to said location, said information being based on said comparison.

In an embodiment, said client system may further comprise a client comparison unit adapted to compare said propagation components with said plurality of pre-stored propagation components associated with said plurality of known locations; and/or a client localization unit adapted to determine information pertaining to said location based on said comparison.

In an example, said client system may be further adapted to provide said extracted propagation components to a server for comparison with said plurality of pre-stored propagation components at said server; and to receive said information pertaining to said location from said server.

According to an embodiment, said client system may be adapted to provide a first part of said extracted propagation components to a first server for comparison with said plurality of pre-stored propagation components at said first server; and to receive a first information pertaining to said location from said first server. Said client system may be further adapted to provide a second part of said extracted propagation components to a second server for comparison with said plurality of pre-stored propagation components at said second server, wherein said second part is different from said first part and said second server is different from said first server. Said client system may be further adapted to receive a second information pertaining to said location from said second server. Said client system may additionally comprise a client localization unit adapted to determine said location based on said first information and said second information.

Alternatively or additionally, said client system may be adapted to select a subset of said extracted propagation components, and to generate a plurality of artificial or imaginary propagation components. Said client system may provide both said subset of extracted propagation components and said generated imaginary propagation components to at least one external computation device.

Said client system may be adapted to receive from at least one external computation device, information pertaining to said location.

Based on knowledge about said generated imaginary components, said client system may be adapted to determine said location of said client receiver unit in terms of said information pertaining to said location from said server, and/or said generated imaginary propagation components.

Alternatively, or additionally, said client system may be adapted to provide at least a part of said extracted propagation components to a server without information pertaining to said electromagnetic emitter corresponding to said propagation components. Said client system may be further adapted to receive said information pertaining to said location from said server. Said client system may further comprise a client localization unit adapted to determine said location based on said information received from said server and said information pertaining to said electromagnetic emitter corresponding to said propagation components.

A client, in the sense of the present disclosure, may refer to any device or system adapted to receive electromagnetic signals from said at least one electromagnetic emitter.

A server, in the sense of the present disclosure, may refer to any processing unit being communicatively coupled to said client system, such as by a wired or wireless connection, and being adapted to process and/or store data.

The invention further relates to a server system, comprising a server receiver unit adapted to receive, from a client, a plurality of propagation components corresponding to a plurality of propagation paths, said propagation components being extracted from an electromagnetic signal received by said client at a location from at least one electromagnetic emitter.

Said server system may further comprise a server analysis unit adapted to compare said received propagation components with a plurality of pre-stored propagation components associated with a plurality of known locations.

Said server analysis unit may be adapted to determine information pertaining to a location of said client based on said comparison, and may be further adapted to provide said information to said client.

In an example, said server system may further comprise a server localization unit adapted to determine said location of said client, wherein said location is in particular determined as a selected location among said plurality of known locations.

As an example, said location may be determined based on a degree of similarity of said extracted propagation components with said selected location.

Said server system, and/or its units may be realized in software or in hardware, or in a combination of software and hardware.

Said client system, and/or its units, may be realized in software or in hardware, or in a combination of software and hardware.

Said system for generating said localization map, and/or its units, may be realized in software or hardware, or in a combination of software and hardware.

Brief Description of the Figures

The methods and systems according to the invention, and the associated beneficial effects, will become best apparent from a description of examples with reference to the Figures, in which:

Fig. 1 is a schematic illustration of a localization environment in which the present invention may be employed;

Fig. 2 illustrates the identification of multipath delays from a response signal according to an embodiment;

| | |
|---|---|
| Fig. 3 | is a schematic flow diagram illustrating the determination of a receiver location from a received response signal in accordance with an embodiment; |
| Fig. 4 | illustrates a variation of the response signal in accordance with changes in the localization environment according to an embodiment; |
| Fig. 5 | is a flow diagram illustrating a method for generating a localization map according to an embodiment; |
| Fig. 6 | is a schematic illustration of a system for generating a localization map according to an embodiment; |
| Fig. 7 | is a flow diagram illustrating a tracking method according to an embodiment; |
| Fig. 8a | is a schematic diagram illustrating a client system according to an embodiment; |
| Fig. 8b | is a schematic diagram illustrating a client system according to another embodiment; |
| Fig. 9 | is a schematic diagram illustrating a server system according to an embodiment; |
| Fig. 10 | is a schematic flow diagram illustrating a tracking method according to an embodiment; |
| Figs. 11a and 11b | illustrate the geometry of an indoor scene used as a test environment for simulating localization techniques according to an embodiment; |
| Figs. 12a to 12c | illustrate the results of a localization tracking and localization error according to an embodiment in comparison with trilateration techniques and simple fingerprinting techniques; |
| Figs. 13a to 13c | illustrate localization errors in the simulation environment and results according to Figs. 12a to 12c, respectively. |
| Figs. 14a to 14c | illustrate simulation results that show a localization error in accordance with different levels of noise variance according to an embodiment; |
| Figs. 15a and 15b | illustrate techniques for calculating a similarity matrix according to an embodiment; |
| Figs. 16a to 16d | illustrate interpolation techniques according to an embodiment; and |
| Fig. 17 | is a flow diagram illustrating techniques for privacy protection according to an embodiment. |

Description of Embodiments

Methods and systems according to embodiments of the invention will now be described with reference to a localization of a wireless receiver, such as a smartphone, in a localization environment 10, which may be an indoor environment such as a shopping mall, an airport, a production site, or a warehouse.

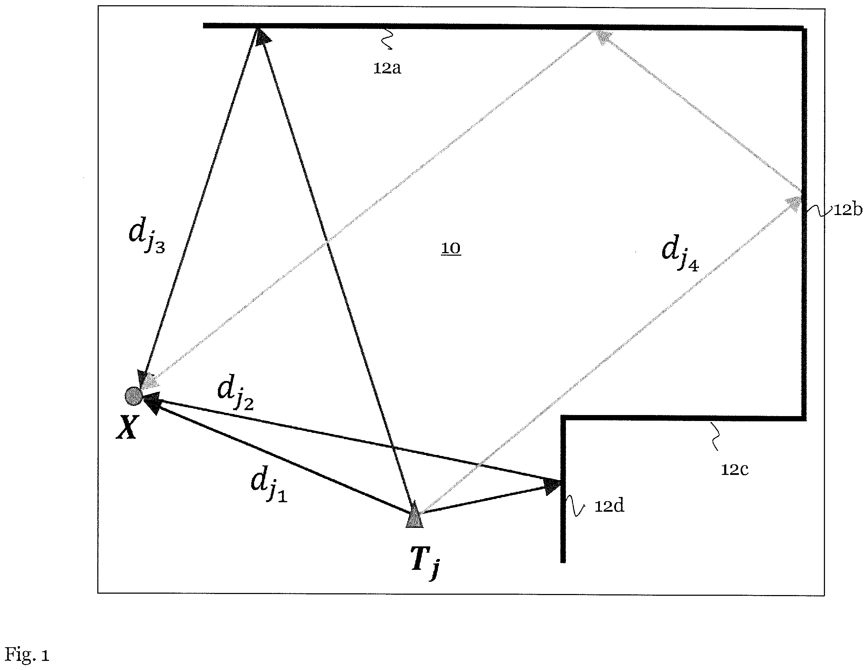

Fig. 1 is a schematic floor plan of the localization environment 10, which may be part of an indoor environment bounded by a plurality of walls 12a to 12d. Within the localization environment 10, a plurality of electromagnetic emitters $T_j$ may be located, such as Wi-Fi transmitters positioned at different locations within the localization environment 10. For the sake of illustration, and in order not to clutter the drawing, Fig. 1 shows only a single electromagnetic emitter $T_j$, whose position is indicated by a triangle in Fig. 1. However, this is for illustration only, and in a general setting the localization environment 10 may comprise a plurality of electromagnetic emitters at various positions distributed across the localization environment 10.

The position of a receiver unit adapted to receive electromagnetic Wi-Fi signals emitted by the electromagnetic emitter $T_j$ is indicated in Fig. 1 with reference X. The receiver unit may be a probe unit at a known location, and may be adapted to generate a localization map of the localization environment 10. Alternatively, the receiver unit may be a client unit, such as a smartphone, whose user would like to determine his position within the localization environment 10 based on a previously-established localization map and the Wi-Fi signals received from the electromagnetic emitters $T_j$.

Fig. 1 shows a plurality of propagation paths $d_j$ that represent electromagnetic Wi-Fi signals propagating within the localization environment 10 between the location of the emitter unit $T_j$ and the location of the receiver unit X. The

propagation path d$_{j1}$ corresponds to a direct (line-of-sight) signal between the electromagnetic emitter T$_j$ and the receiver unit X, while the propagation path d$_{j2}$, d$_{j3}$, and d$_{j4}$ correspond to reflected propagation paths that involve a single reflection or multiple reflections off the walls 12a, ..., 12d of the localization environment 10. In general, there will be a large number of propagation paths between the location of the electromagnetic emitter T$_j$ and the location of the receiver unit X, corresponding to a large number of reflections off the walls 12a, ..., 12d. However, only four propagation paths d$_{j1}$, ..., d$_{j4}$ are shown in Fig. 1 in order not to clutter the drawing.

In a general scenario, the location environment 10 may contain *M* transmitters. The transmitters are labeled *T$_j$* with *j* = 1...*M*. In the off-line phase of the localization scheme, a multipath delay profile (MDP) can be measured at *N* locations, i.e., *Y$_i$* with *i* = 1...*N*, in the localization environment 10. The MDP that corresponds to the location *Y$_i$* is labeled **F$_i$**. The pairs (*Y$_i$*,*F$_i$*) are then stored to a map. In the online phase, the receiver measures the MDP, **D,** at an unknown location *X,* and tries to obtain information about the location X by comparison with the map.

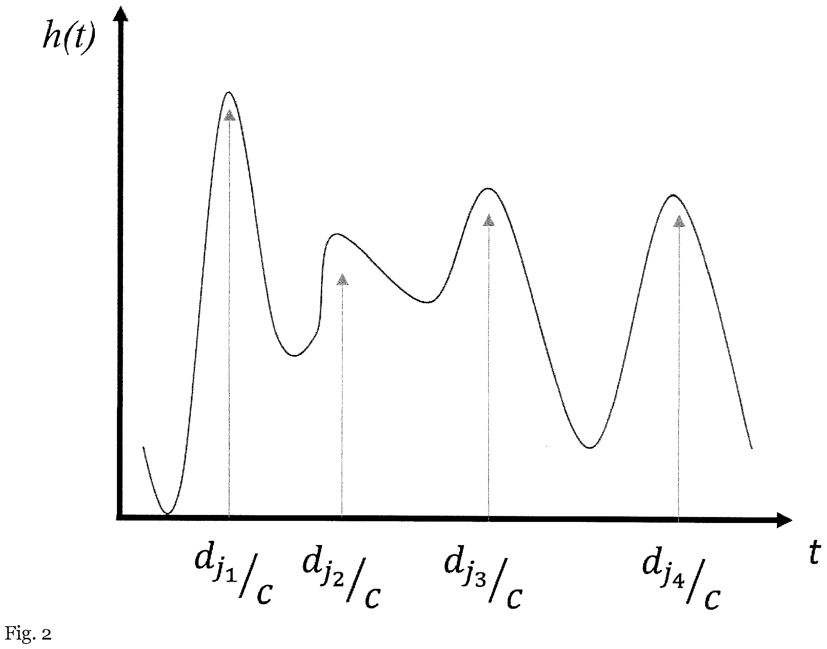

A multipath delay profile (MDP) is a set of vectors. The MDPs **F**$_i$ = {*f$_1$*,..,*f$_M$*} with *i* = 1...*N* are measured in the offline phase, and the MDP **D** = {*d$_1$*,...,*d$_M$*} is observed in the online phase of the localization algorithm. Each vector in a MDP contains the propagation path lengths for one transmitter. The vector *d$_j$* = [*d$_{j1}$*,..,*d$_{jk}$*] contains the length of the different paths a signal can travel from the transmitter *T$_j$* to the receiver located at point X. An example MDP {[*d$_{j1}$*,...,*d$_{j4}$*]} is shown in Fig. 2. The variables and notation used in this disclosure are summarized in Table I.

Table I

| Notation | |
|---|---|
| *M* | Number of Transmitters |
| *N* | Number of MDPs stored in the fingerprint map |
| *T$_j$* | Transmitter, j = 1..*M* |
| *Y$_i$* | Point in the fingerprint map, i = 1...*N* |
| *X* | Unknown location of the receiver in the online phase of the localization scheme |
| **F**$_i$ = {*f$_1$*,....,*f$_M$*} | MDP stored with the point *Y$_i$* in the fingerprint map |
| *f$_{ij}$* = [*f$ij$1*,...,*f$_{ijK}$*] | Vector in F$_i$ that corresponds to *T$_j$* |
| *f$ij$1,...f$ij$K* | Lengths of the signal propagation paths from *T$_j$* to *Y$_i$* |
| *f$_l$* | Element of the vector *f$_{ij}$* that is closest to the value *d$_{j1}$* |
| **D** = {*d$_1$*,...,*d$_M$*} | MDP measured in the online phase |
| *d$_j$* = [*d$_{j1}$*,...,*d$_{jk}$*] | Vector in **D** that corresponds to *T$_j$* |
| *d$_{j1}$,...,d$_{jK}$* | Lengths of the signal propagation paths from *T$_j$ to X* |
| *d$jl$* | Element of the vector *d$_j$* selected at the *l*- th iteration of the fingerprint matching algorithm |
| **L** | A set of all indexes *l* for which there exists a *f$_l$* ∈ *f$_{ij}$* such that \|*d$_{jl}$* - *f$_l$*\| → min and \|*d$_{jl}$* - *f$_l$*\| < *ε* |
| *ε* | Similarity threshold |
| $\gamma$(**D**,**F**$_i$\|*T$_j$*) | Similarity metric between two fingerprints **D** and **F$_i$** calculated for transmitter *T$_j$* |
| $\gamma$(**D**,**F$_i$**) | Similarity metric between two fingerprints **D** and **F$_i$** |

As an electromagnetic wave propagates with the speed of light, the distance a signal travels corresponds to a delay at the receiver. In an indoor scenario, the signal will be reflected multiple times from the walls, floors, ceilings and objects before it reaches the receiver (cf. Fig. 1). As a result, the received signal *r(t)* will be composed of multiple delayed and attenuated copies of the original signal *s(t)* summed up at the receiver.

$$r(t) = \sum_k a_k s(t - \tau_k) + z(t), \qquad (1)$$

where $\alpha_k$ is the attenuation undergone by the signal along the *k*-th path from the transmitter to the receiver and $\tau_k$ is the delay. The term z(t) represents random noise added to the signal at the receiver. With $\tau_k = d_k/c$, we obtain

$$r(t) = \sum_k a_k s(t - d_k/c) + z(t), \qquad (2)$$

where $d_k$ is the length of the path traveled by the signal and c is the speed of light. The equation above represents a wideband model and therefore can be used to obtain the response to any transmitted signal.

Equation (2) calculates the received signal in a multipath environment. It can be rewritten as

$$r(t) = s(t) * h(t), \qquad (3)$$

where * denotes a convolution and (t) is the transmitted signal and $h(t)$ is the impulse response of the channel between the receiver and transmitter. A basic channel impulse response (CIR) of a multipath channel between a receiver at point $X$ and a transmitter $T_j$ can be written as:

$$h(t) = \sum_k a_{jk}\delta(t - d_{jk}/c) + z(t) \qquad (4)$$

where $d_{jk}$ is the length of one path traveled by the signal from $T_j$ to $X$, $\alpha_{jk}$ is the attenuation of the path, $\delta(t)$ is the Dirac delta function and $c$ is the speed of light. The term $z(t)$ represents random noise added to the signal at the receiver.

It can be seen from Eq. (4) that the multipath delays can be identified as peaks in the CIR. This is illustrated in Fig. 2.

In Fig. 2, the different peaks correspond to different multipath delays in the channel impulse response, and may be extracted from the channel impulse response by means of determination of peaks or Gaussian fits. Some such techniques are described in further detail in D. Bartlet, "Essentials of Positioning and Location Technology", Cambridge University Press, 2013.

In the off-line phase of the localization scheme, the MDP is measured for multiple points in the localization environment 10 to create the fingerprint map. In the online phase, a similarity metric $\gamma$ may be computed between the measured MDP and the MDPs stored in the fingerprint map. The point on the map, which corresponds to the highest similarity metric is picked as the receiver's location. $\gamma(\mathbf{D},\mathbf{F}_i)$ is the similarity metric between a measured MDP - $\mathbf{D}$, and $\mathbf{F}_i$, a MDP from the fingerprint map. $\gamma(\mathbf{D},\mathbf{F}_i)$ is the sum of partial similarity metrics calculated for every transmitter.

$$\gamma(\mathbf{D},\mathbf{F_i}) = \sum_{j=1}^{M} \gamma(\mathbf{D}, \mathbf{Fi}|Tj) \qquad (5)$$

Let $d_j$ be the vector in $\mathbf{D}$ that contains the propagation path lengths from $X$ to the transmitter $T_j$. Let $f_{ij} \in \mathbf{F_i}$ also correspond to $T_j$. The similarity metric $\gamma(\mathbf{D},\mathbf{F_i}|T_j)$ is calculated from $d_j$ and $f_{ij}$. For every delay value $d_{jl} \in d_j$, a best match value $f_l \in f_{ij}$ is selected such that $|d_{jl} - f_l|$ is minimal. If $|d_{jl} - f_l|$ is less then a selected threshold value $\varepsilon$, the path lengths $d_{jl}$ and $f_l$ are considered matched. In that case, $l$ is added to the set $\mathbf{L}$ and a term $(\varepsilon - |d_{jl} - f_l|)^2$ is added to the similarity metric. Thus, the partial similarity metric is calculated as:

$$\gamma(\mathbf{D},\mathbf{F_i}|T_j) = \sum_{l\in\mathbf{L}}(\varepsilon - |djl - fl|)2 \qquad (6)$$

$$\mathbf{L} = \{l| \exists fl \in f_{ij} : |d_{jl}-f_l| \to min \cap |d_{jl}-f_l| < \varepsilon\} \qquad (7)$$

where $d_{jl} \in d_j, f \in f_{ij}$. The threshold value $\varepsilon$ can be chosen empirically based on the input data of the algorithm. The similarity metric is designed to be higher in magnitude when more matched pairs $(d_{jl}, f_l)$ that satisfy the above conditions are found. The smaller the differences $|d_{jl} - f_l|$ between the matched propagation distances are, the higher the magnitude of the similarity metric will be.

Table II summarizes an example of the localization algorithm as described above.

Localization through the MCA algorithm

Data: Measured multipath delay profile

$$\mathbf{D} = \{d_j\}, j = 1..M$$

transmitters $\{T_j\}, j = 1..M$

fingerprint map $\mathbf{MAP} = \{(Y_i, \mathbf{F_i})\}, i = 1..N$

Parameters: Similarity threshold $\varepsilon$

Result: $X$ – Location of the receiver

for $\forall Y_i$ *in the fingerprint map* do

    for $\forall$ *transmitter* $T_j$ do

        $f_{ij} \leftarrow \mathbf{F_i}(j)$

        for $\forall d_{jl} \in d_j$ do

            $f_l \leftarrow \text{argmin}_{fl \in f_{ij}} |d_{jl} - f_l|$

            if $|d_{jl} - f_l| < \varepsilon$ then

                $\gamma(\mathbf{D}, \mathbf{F}_i | T_j) \leftarrow +(\varepsilon - |d_{jl} - f_l|)^2$

            end

        end

    end

end

In the scenario presented, the indoor localization system

$i \leftarrow \text{argmax}_i \Sigma_j \gamma(\mathbf{D}, \mathbf{F}i | Tj)$

$X \leftarrow Y_i$

Table II

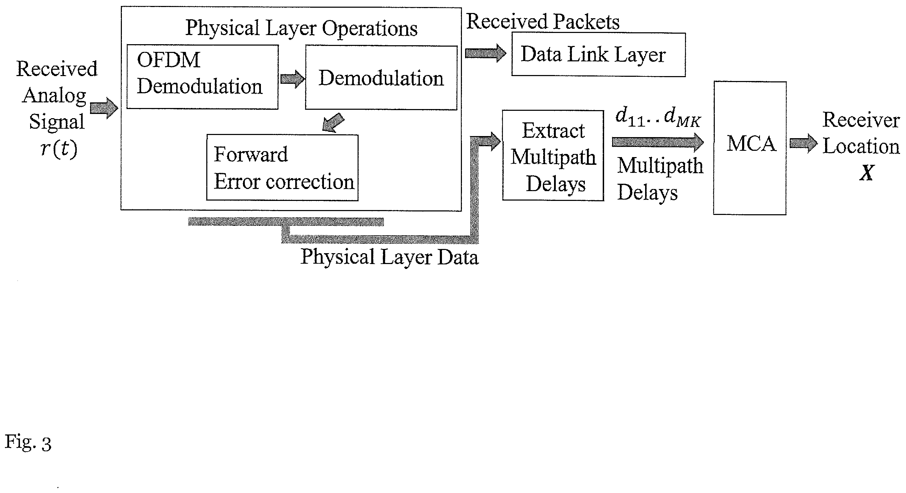

Fig. 3 is a schematic flow diagram which summarizes processing steps for determining a receiver location according to an embodiment in additional details.

A number of physical layer operations may be executed on the received analog signal r(t), comprising orthogonal frequency-division multiplexing (OFDM) demodulation, demodulation and forward error correction. The received physical layer data are processed to extract the multipath delays as described above with reference to Fig. 2. This results in the set of propagation components, which are submitted to the multipath component analysis as described above with reference to the algorithm of Table II to obtain the receiver location X.

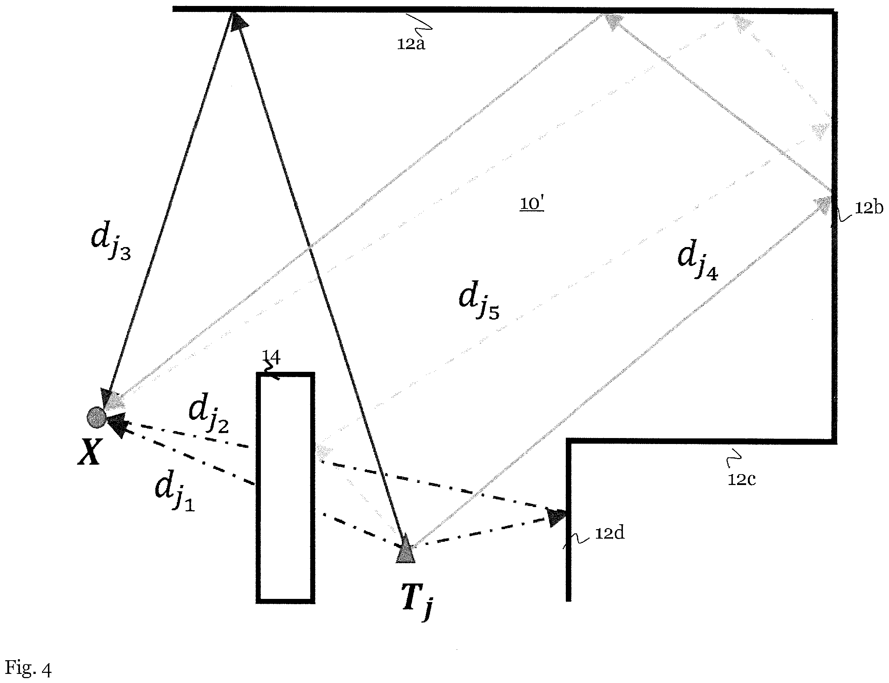

The techniques according to the present invention are based on the realization that the extracted propagation components provide an advantageous localization map against which subsequent measurements of propagation components at an unknown location may be compared. In particular, the propagation components do not fluctuate significantly over time. Moreover, the set of propagation components may remain useful even in situations in which the localization environment changes significantly, as will now be explained in greater detail with reference to Fig. 4.

Fig. 4 is a schematic floor plan of a localization environment 10' that generally corresponds to the localization environment 10 of Fig. 1, apart from an obstacle 14 that blocks part of the propagation path. For instance, the direct propagation path $d_{j1}$ between the location of the electromagnetic emitter $T_j$ and the receiver unit at the location X is blocked by the obstacle 14, and hence is no longer available. Moreover, additional propagation paths such as $d_{j5}$ appear because of reflections of signals off the obstacle 14. However, some characteristic propagation paths such as $d_{j3}$ and $d_{j4}$ remain unaltered in spite of the obstacle 14, and may be determined from the channel impulse response as shown in Fig. 2 to reliably determine the location X.

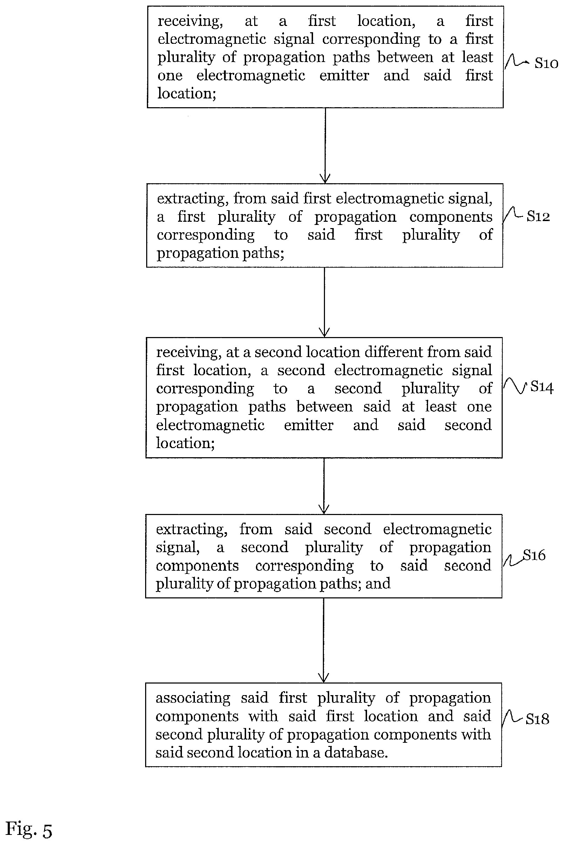

Fig. 5 is a flow diagram that illustrates a method for generating a localization map according to an embodiment.

In a first step S10, a first electromagnetic signal corresponding to a first plurality of propagation paths between at least one electromagnetic emitter and a first location is received at said first location.

In a second step S12, a first plurality of propagation components corresponding to said first plurality of propagation paths is extracted from said first electromagnetic signal, as described above with reference to Fig. 2.

In a third step $S_{14}$, a second electromagnetic signal corresponding to a second plurality of propagation paths between said at least one electromagnetic emitter and a second location is received at said second location. Said second location may be a location different from said first location, and may be another location in the grid of locations $Y_i$, i = 1, ..., N, which the user selected for the localization map.

In a fourth step S16, a second plurality of propagation components corresponding to said second plurality of propagation paths is extracted from said second electromagnetic signal.

In a fifth step S18, said first plurality of propagation components is associated with said first location and said second plurality of propagation components is associated with said second location, such as in a database.

The flow diagram of Fig. 5 shows the method steps in a sequential order in which the extracting steps S12 and S16 immediately follow the respective steps of receiving the first electromagnetic signal and receiving the second electromagnetic signal, respectively. However, the invention is not so limited, and also comprises embodiments in which the sequence of steps is performed in a different order. For instance, the respective electromagnetic signals may be received at a plurality different locations first before any propagation components are extracted.

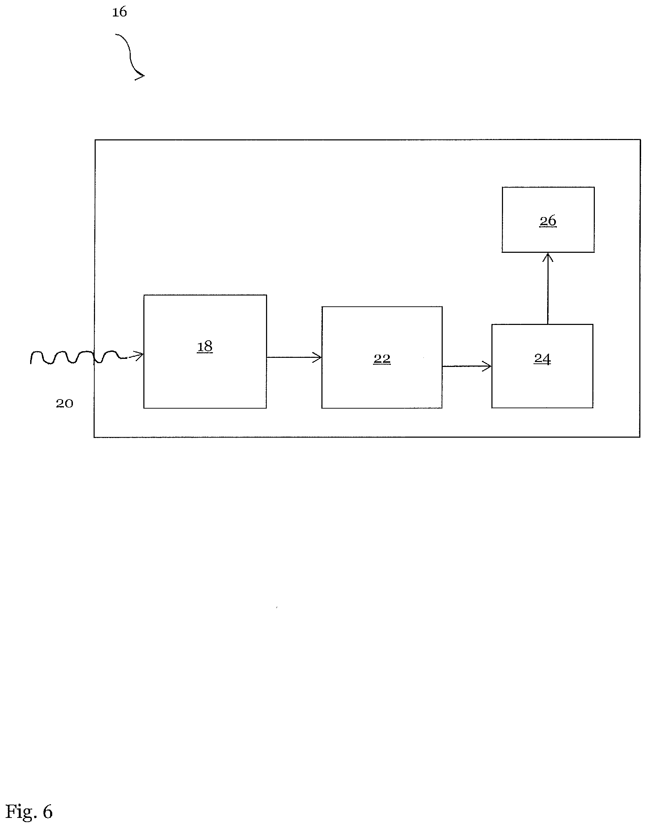

Fig. 6 is a schematic diagram illustrating a system 16 for generating a localization map according to an embodiment. The system 16 may be employed as a probe unit, which could be mounted to a robot and subsequently moved to locations in the localization environment 10,10' that correspond to the desired grid $Y_i$, i = 1, ..., N.

As can be taken from Fig. 6, the system 16 comprises a receiver unit 18 adapted to receive electromagnetic signals 20, such as wireless signals emitted by the electromagnetic emitters $T_j$.

The receiver unit 18 may perform a plurality of physical layer operations as described in more detail with reference to Fig. 3 above, and may provide the resulting physical layer data to an extraction unit 22 adapted to extract, from the electromagnetic signals 20, the corresponding propagation components as described above with reference to Fig. 2.

A map unit 24 may be adapted to associate the extracted propagation components with the respective location at which the electromagnetic signals 20 have been received. In particular, the map unit 24 may store said locations and corresponding propagation components in a database 26.

In some embodiments, the system 16 may be adapted to emit a trigger signal (not shown) to trigger the electromagnetic emitters $T_j$ to emit the electromagnetic signals 20. For instance, the system 16 may trigger the plurality of electromagnetic emitters $T_j$ in the localization environment 10, 10' one after the other, and may cause the electromagnetic emitters to respond with electromagnetic signals comprising an identification of said respective electromagnetic emitters. This may allow the system 16 to distinguish between electromagnetic signals 20 received from different electromagnetic emitters. The map unit 24 may store the identification information alongside the corresponding propagation components in the database 26.

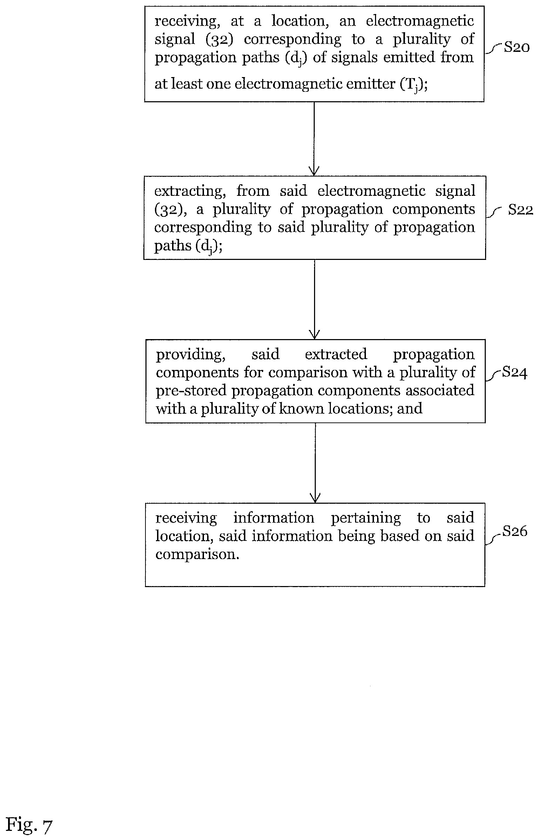

Fig. 7 is a schematic flow diagram illustrating a tracking method in an online phase, such as to determine an unknown location of a client system, e. g., a smartphone, placed at a location X within the localization environment 10, 10'.

In a first step S20, an electromagnetic signal corresponding to a plurality of propagation paths of signals emitted from at least one electromagnetic emitter is received at a location.

In a second step S22, a plurality of propagation components corresponding to said plurality of propagation paths are extracted from said electromagnetic signal, such as by employing the techniques described above with reference to Fig. 2.

In a third step S24, said extracted propagation components are provided for comparison with a plurality of pre-stored propagation components associated with a plurality of known locations, such as based on the localization map described above.

In a fourth step S26, information pertaining to said location is received, said information being based on said comparison.

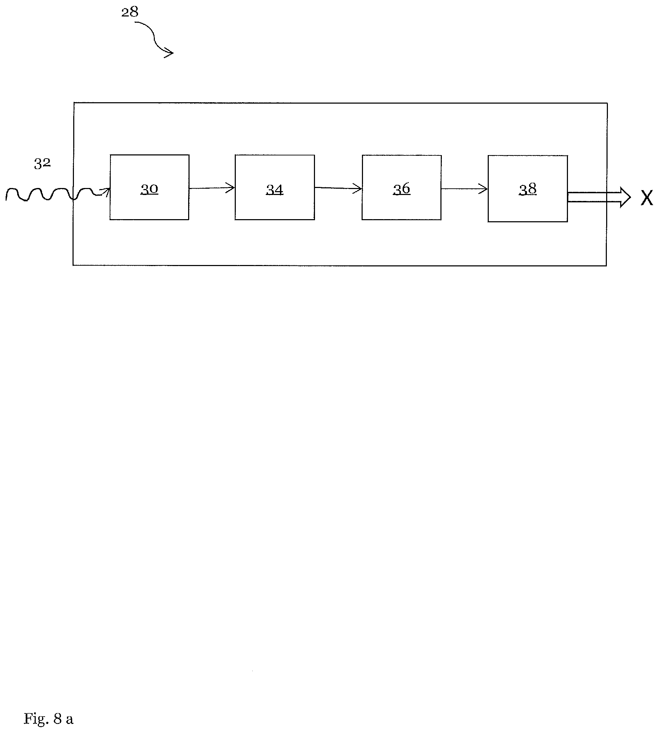

In some embodiments, comparing of said propagation components with said plurality of pre-stored propagation components associated with said plurality of known locations and determining said information pertaining to said location based on said comparison, such as based on the algorithm described with reference to Table II above, may be performed locally at the client system. A corresponding client system 28 is illustrated schematically in Fig. 8a.

The client system 28 comprises a client receiver unit 30 adapted to receive, at a location, an electromagnetic signal 32 corresponding to a plurality of propagation paths of signals emitted from at least one electromagnetic emitter, such as the plurality of electromagnetic emitters $T_j$.

The client system 28 further comprises an extraction unit 34 adapted to extract, from said electromagnetic signal, a plurality of propagation components corresponding to said plurality of propagation paths.

The client receiver unit 30 and the extraction unit 34 generally correspond to the receiver unit 18 and the extraction unit 22 described above for the probe receiver unit 16 with reference to Fig. 6.

As can be further taken from Fig. 8a, the client system 28 also comprises a client comparison unit 36 adapted to compare said propagation components extracted by the extraction unit 34 with the plurality of pre-stored propagation components associated with the plurality of known locations. The client comparison unit 36 may employ the algorithm described with reference to Table II above.

As can be further taken from Fig. 8a, the client system 28 additionally comprises a client localization unit 38 adapted to determine information pertaining to the location of the client system 28 based on the comparison. The client localization unit 38 may output the location X to a user.

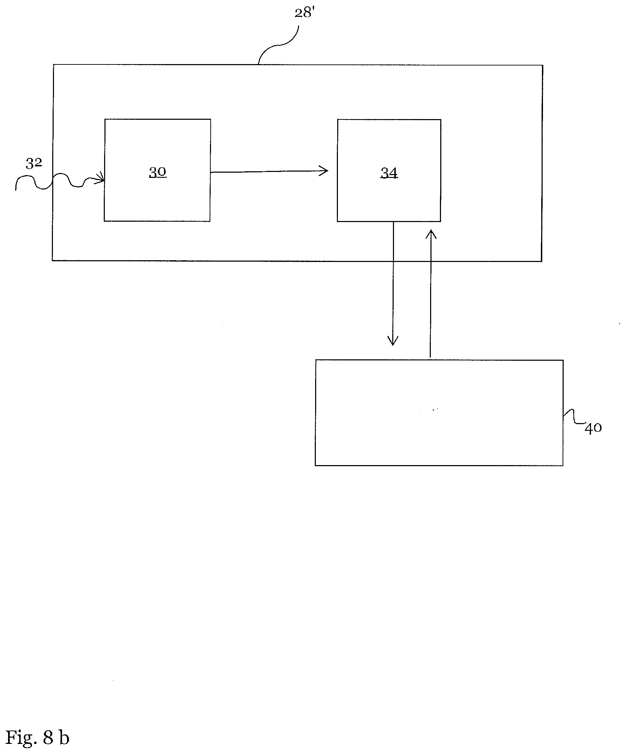

In other embodiments, the steps of comparing the propagation components with the plurality of pre-stored propagation components and/or determining information pertaining to the location of the client system may be relegated to an external server system. A corresponding embodiment is schematically illustrated in Fig. 8b.

Fig. 8b illustrates a client system 28' comprising a client receiver unit 30 and an extraction unit 34 as described above with reference to Fig. 8a. However, unlike in the embodiment of Fig. 8a, the extracted propagation components are provided to an external server system 40 coupled to the client system 28' via a network, such as the internet. The server system 40 may perform the steps of comparing the propagation components with the plurality of pre-stored propagation components associated with a plurality of known locations, and determining information pertaining to the location based on the comparison. The resulting information may be provided back to the client system 28'.

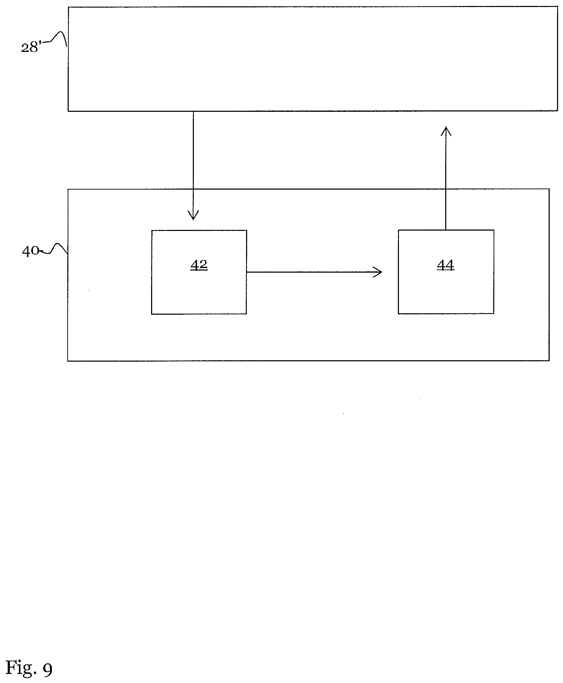

An embodiment of a corresponding server system 40 is illustrated schematically in Fig. 9.

As can be taken from Fig. 9, the server system 40 comprises a server receiver unit 42 adapted to receive, from the client system 28', a plurality of propagation components corresponding to a plurality of propagation paths, wherein the propagation components are extracted from an electromagnetic signal received by the client system 28'.

The server system further comprises a server analysis unit 44 coupled to the server receiver unit 42. The server analysis unit 44 may be adapted to receive the propagation components from the server receiver unit 42, and to compare the received propagation components with a plurality of pre-stored propagation components associated with a plurality of known locations in accordance with the algorithm described above with reference to Table II. The server analysis unit 44 may be further adapted to determine information pertaining to a location of the client system 28' based on the comparison, and to provide the information to the client system 28' via the network connection.

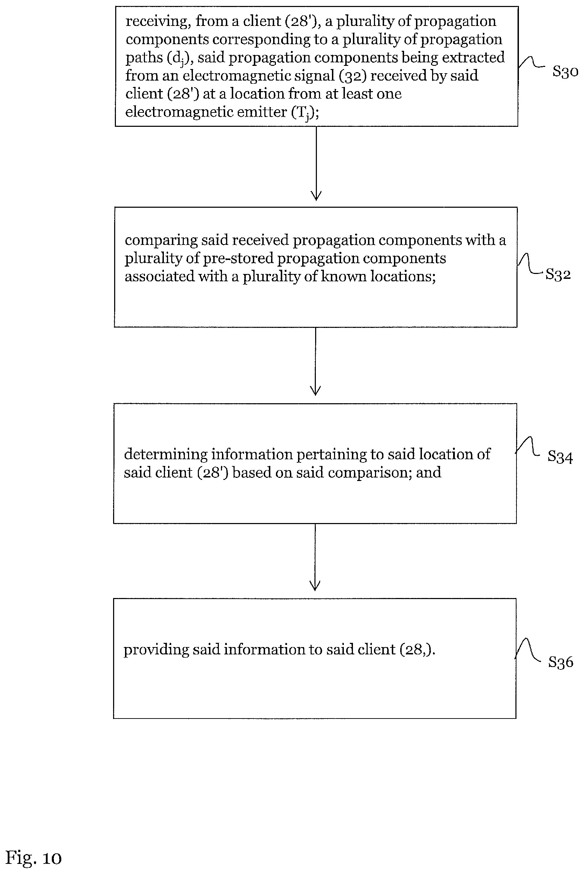

Fig. 10 is a schematic flow diagram illustrating a sequence of steps as may be performed at a server system, such as the server system 40 described above with reference to Fig. 9.

In a first step S30, a plurality of propagation components corresponding to a plurality of propagation paths are received from a client. Said propagation components may be extracted from an electromagnetic signal received by said client at a location from at least one electromagnetic emitter.

At a second step S32, said received propagation components may be compared with a plurality of pre-stored propagation components associated with a plurality of known locations.

In a third step S34, information pertaining to said location of said client is determined based on said comparison.

In a fourth step S36, said information is provided to said client.

Simulation results

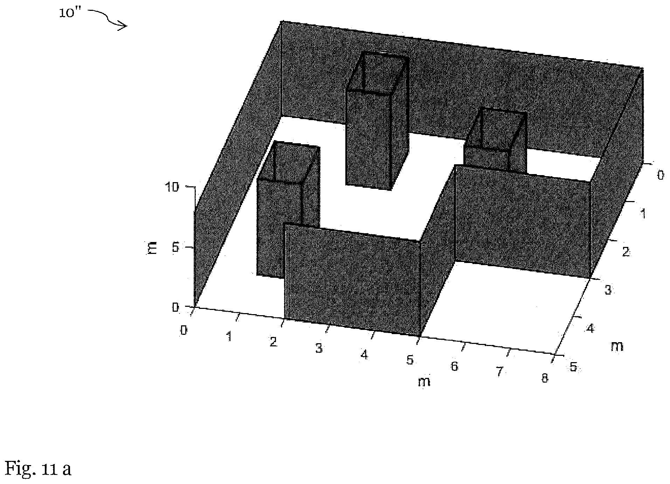

Some simulation results illustrating the advantageous effects of the method and system according to the invention will now be described in comparison with prior art techniques with reference to Figs. 11a through 14c.

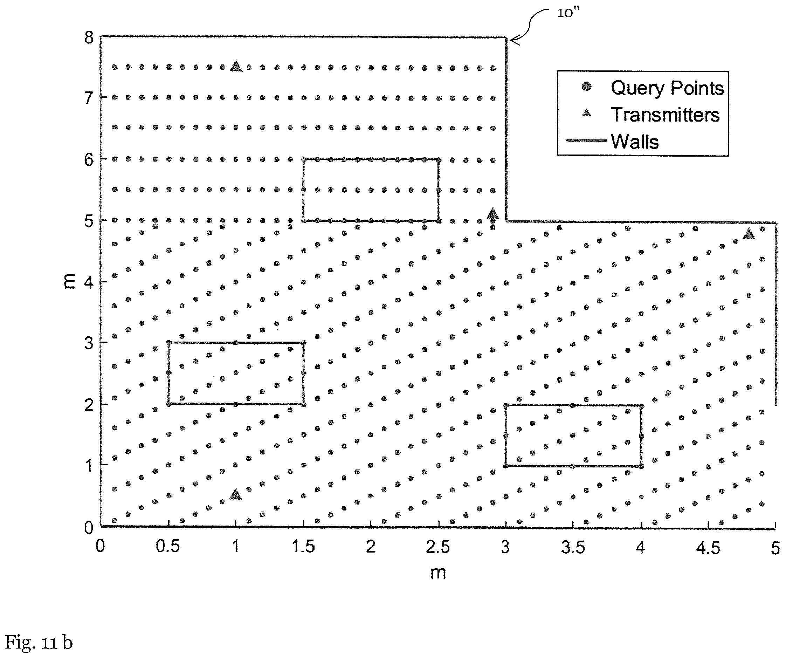

Fig. 11a represents an indoor geometry of a localization environment 10" that is represented by bounded planes corresponding to walls, ceilings and floors. A plurality of obstacles is provided in the localization environment 10". The position of transmitters and query points is illustrated in the corresponding floor plan of Fig. 11b.

In a simulation, the MDPs were extracted at the receivers placed on every point on the grid in Fig. 11b. The lengths of the signal propagation paths of the MDPs were precisely calculated using a ray-tracing approach. The MDPs were calculated twice - in the off-line and online localization phases. First, the off-line phase of the localization schemes was simulated under the following assumptions:

- The signal is treated as a broadband signal and the wave propagation and reflections are considered to be frequency independent.
- Wave phenomena such as interference and diffraction are neglected.
- All the surfaces in the simulation are considered planar.
- All the receivers and transmitters are considered stationary or moving at speeds low enough that signal changes due to the Doppler effects can be neglected.

In a practical implementation the extracted multipath delay values may deviate from the actual MDP due to:

- Computational errors due to the extraction of multipath components;

- Additive White Gaussian (AWGN) noise at the receiver;
- Scattering of the signal due to the curvature and material properties of the walls and objects.

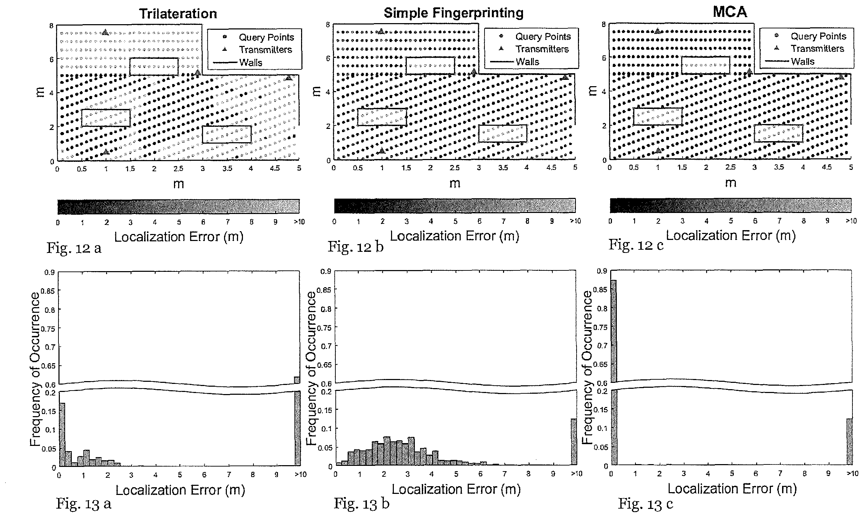

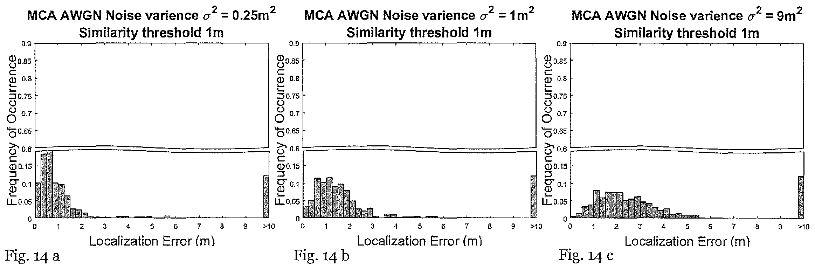

Some of the noise components can be easily modeled. Due to the number and variety of noise sources, the unpredictability of some of them and the overall lack of information, AWGN noise is assumed in the system. Initially, in the results presented in Figs. 12a - 13c, the localization algorithms are simulated without noise. Afterwards, in the simulation shown in Figs. 14a to 14c AWGN noise is added directly to the multipath propagation path lengths $d_{j1},...,d_{jK}$.

Three localization algorithms were applied to the calculated MDPs - MCA according to an embodiment, trilateration and 'simple fingerprinting' as prior art techniques for comparison. In this part of the simulation, no noise was added to the MDPs. A localization error was calculated for each query point. The localization errors are plotted in Fig. 12a to 12c. The grey levels of the query points represent the localization error calculated at those points. The localization errors at points shown in dark grey are small, below 1-2m. Localization errors at points shown in bright grey are above 8m. Figs. 13a to 13c show histograms obtained from the localization errors for each algorithm.

The diagrams of Figs. 12a, 13a illustrate the performance of localization through trilateration. The localization errors were calculated in the following way: Signal propagation distances were calculated between the transmitters and the query points. We refer to them as 'simulation distances'. The distances were calculated as the shortest path length in the query MDPs. Under line-of-sight (LOS) conditions this value is equal to the distance between the transmitter and the query point. Under none-line-of-sight (NLOS) conditions the smallest distance value in the MDP will correspond to the propagation delay that can be measured through time-of-flight by the receiver. Afterwards, a mean distance error was calculated for each query point. It was calculated as the mean of the differences between the simulation distances and the Euclidean distances between the transmitters and the query point. If the distances from a receiver to several transmitters are known, different methods can be used calculate the receiver location. Therefore, to generalize, we used the mean distance error to represent the localization error for each query point. The simulation results show several regions with points in dark grey, i.e., with low localization errors. In those regions LOS conditions existed to all transmitters. However the area of these regions is small and the majority of the geometry is 'shadowed' by the three obstacles.

The diagrams of Figs. 12b, 13b correspond to the localization algorithm referred to as 'simple fingerprinting'. For each query point a channel impulse response (CIR) $h(t)$ was calculated from the reference MDPs using Eq. (4) (the attenuation factors $a_k$ were neglected). The calculated CIRs $h(t)$ were used as fingerprints. In the online phase of the localization algorithm, a CIR $h(t)$ was calculated for each query point from the query MDPs. The calculated CIR is then compared to the fingerprint map using cross-correlation. The point to which the 'best matching' fingerprint corresponds, was picked as the calculated location of the query point. The localization error was calculated as the Euclidean distance between the calculated location and the actual coordinates of each query point. The localization errors which are above $10m$ in the histogram correspond to the points inside the obstacles. Since no signal could be received inside the obstacles, localization could not be performed. The results show that the localization algorithm is not as sensitive to the NLOS conditions. There is no obvious 'shadowing' like in the case of the diagrams on the left. However, it can be seen from Fig. 12b that the regions in dark grey are the same as in Fig. 12a, i.e., where the obstacles effected the MDPs the least. For the other points, the localization error still ranges from 0 to 5 $m$, with the average being around 2.5 $m$. This shows that if the CIR is used as a fingerprint, the localization can be performed in NLOS conditions, however localization accuracy is still influenced by changes in the environment.

The diagrams in Figs. 12c, 13c plot the localization errors obtained from the MCA algorithm according to the embodiment described above. The similarity threshold was chosen as $1m$. The results show that localization was performed precisely for all query points, except the query points located inside the obstacles. The query points located inside the obstacles correspond to the non-zero localization errors in the histogram. The results show that the MCA localization algorithm can perform precise localization under NLOS conditions and is robust against changes in the environment.

The performance of the MCA algorithm was also simulated under noisy conditions. AWGN noise was added to the query MDPs. The similarity metric was set to 1m. The variance $\sigma^2$ of the AWGN was set to $0.25m^2$, $1m^2$ and $9m^2$, respectively. Figures 14a to 14c show the resulting error histograms. The results show that algorithm can still perform well in noisy conditions, up to noise with a variance of $9m^2$.

Algorithm Performance

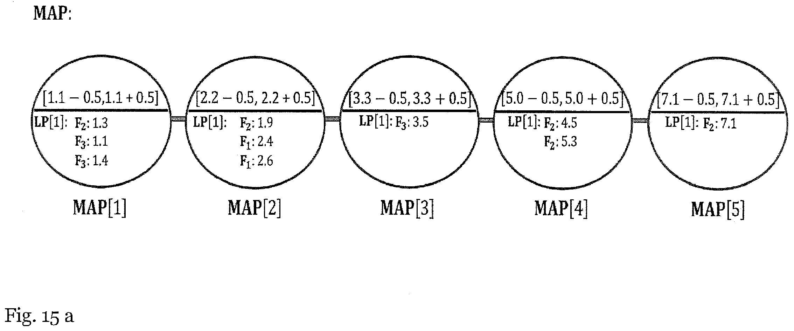

Figs. 15a show an example of how the comparison of the measured fingerprints to the fingerprints stored in the localization map may be sped up in a variant of the algorithm described above.

We illustrate the data structure and the fingerprint matching procedure through the following numerical example. For simplicity, we consider a case with only one electromagnetic emitter $T_1$. Therefore, the fingerprints **D, F₁ - F₃** contain one vector each. Let

$$\mathbf{D} = \left\{ \begin{bmatrix} 1.1 \\ 2.1 \\ 4.7 \\ 5.1 \end{bmatrix} \right\} \quad \mathbf{F_1} = \left\{ \begin{bmatrix} 2.4 \\ 2.6 \end{bmatrix} \right\}$$

$$\mathbf{F_2} = \left\{ \begin{bmatrix} 1.3 \\ 1.9 \\ 4.5 \\ 5.3 \\ 7.1 \end{bmatrix} \right\} \quad \mathbf{F_3} = \left\{ \begin{bmatrix} 1.1 \\ 1.4 \\ 3.5 \end{bmatrix} \right\}.$$

$$(8)$$

Figure 15a shows the fingerprint map $\mathbf{MAP} = \{\mathbf{F_1}, \mathbf{F_2}, \mathbf{F_3}\}$ stored as the data structure described above. In the example, $\varepsilon = 0.5$.

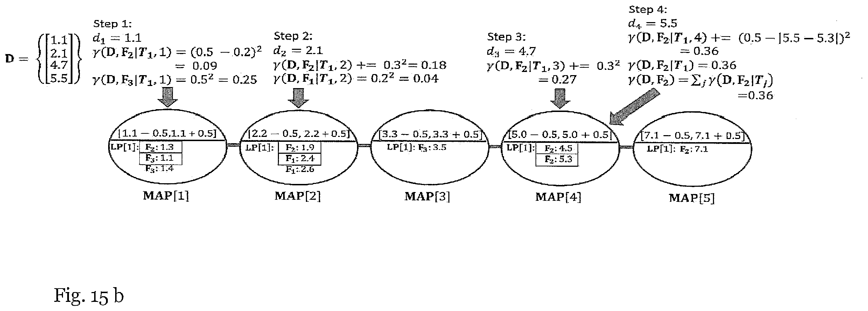

A computationally more efficient variant of the fingerprint matching algorithm is illustrated step by step in Fig. 15b. For every transmitter $T_j$ the following procedure is repeated: For each measured signal propagation distance $d_k \in d_j$, $d_j \in \mathbf{D}$, the data structure $\mathbf{MAP}[k]$ is found in the array, such that $d_k \in [N_k - \varepsilon, N_k + \varepsilon]$. Afterwards, for every fingerprint index $i$, stored in $\mathbf{MAP}[k].LP[j]$, a propagation distance $f$ is selected such that $(i,f) \in \mathbf{MAP}.LP[k] \cap |d_k - f| \rightarrow \min$. The partial similarity metric for $\mathbf{F_i}$ is updated as

$$\gamma(\mathbf{D}, \mathbf{F_i} | Tj, k) = \gamma(\mathbf{D}, \mathbf{F_i} | Tj, k-1) + (\varepsilon - |d_k - f|)^2 \qquad (9)$$

Note, the algorithm described above only alters the calculation order. The maximum similarity metric, calculated for the measured fingerprint, is exactly the same as in the MCA algorithm described previously.

$\gamma(\mathbf{D}, \mathbf{F_i})$ does not need to be computed for all fingerprints. The complexity order of the proposed fingerprint matching algorithm becomes $O(M \times K \times log(N_N) \times E[\mathbf{F}])$, where $M$ is the number of electromagnetic emitters in the setup, $K$ is the number of propagation distances stored in the measured fingerprint $\mathbf{D}$, $N_N$ is the number of intervals and data structures stored in the map array and $E[\mathbf{F}]$ is the average number of fingerprint indexes per array of pairs. It can be seen that for a large number of fingerprints in the map, the complexity of the updated MCA algorithm be would be much lower than $O(N \times log(N))$. Although $E[\mathbf{F}]$ can scale with the number of fingerprints $N$, it mainly depends on the value of $\varepsilon$. For a large number of fingerprints, $N_N$ saturates and becomes a constant. It will only depend on the minimum and maximum propagation distances and the similarity threshold $\varepsilon$. In contrast, the order of complexity of existing fingerprint matching algorithms is $O(f_{comp}(M) \times N \times log(N))$.

Interpolation Techniques

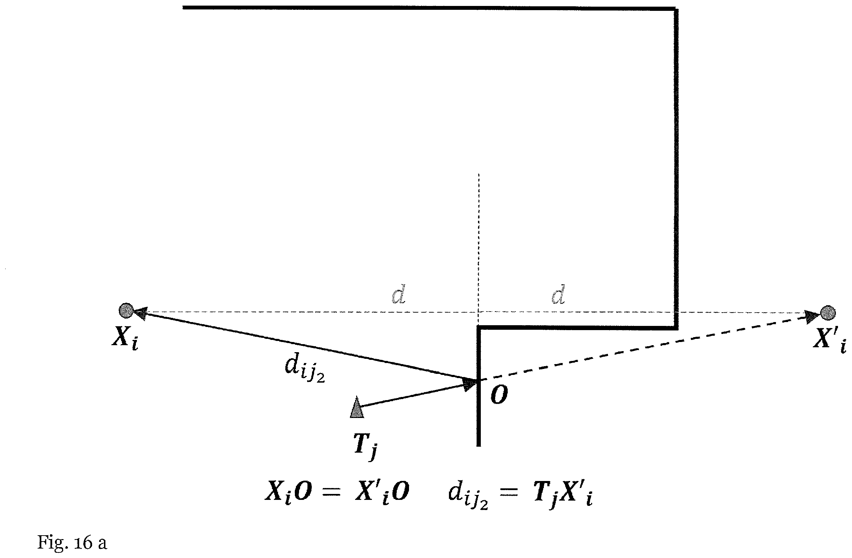

It is another advantage of the techniques according to the invention that the extracted propagation components may allow for interpolation to enhance the resolution of the localization map without the need to collect additional measurements, as will now be described with reference to Figs. 16a to 16d.

We will show that the length of a propagation path from a reference point to a transmitter can be interpolated precisely, if the lengths of the propagation paths from several neighboring reference points to the transmitter are known.

We define a virtual image (VI) of a point as its reflection with respect to a given plane. The VI is located 'behind the plane' as shown in Fig.16a. A reflected or virtual plane is a reflection of a plane from another plane. In Fig.16a, the distance from point $T_j$ to the point $X_i$, over the reflected path is equal to the distance from $T_j$ to $X'_i$, the reflection of $X_i$. This also holds when several reflections occur along the signal propagation path. The VIs and virtual planes can be calculated iteratively. The virtual planes can be used to calculate new VIs at every step of the algorithm.

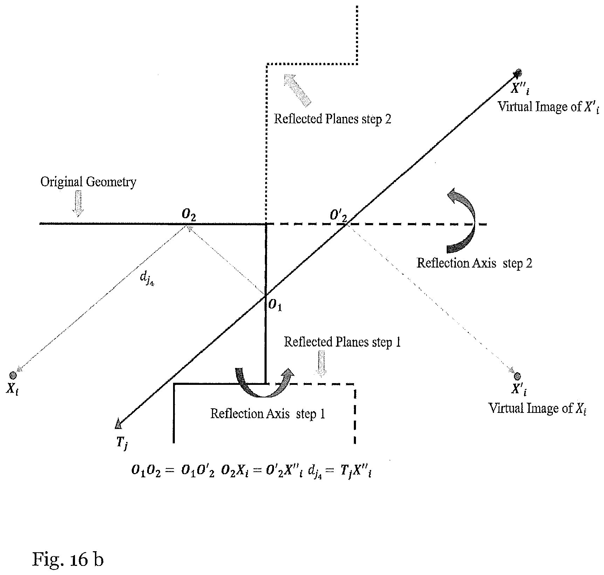

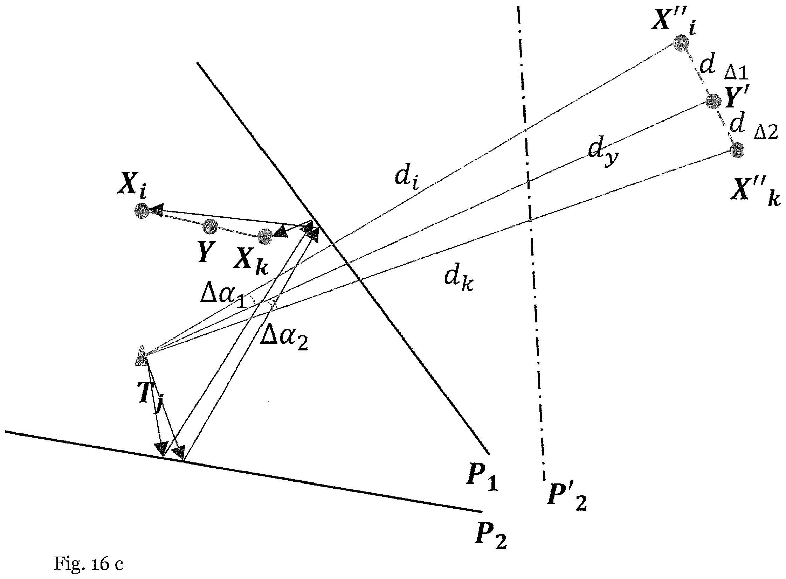

In Fig.16b, the length of the propagation path $X_iO_2O_1T_j$ is equal to $X"_iTj$. Therefore, the reflected paths from $T_j$ to $X_i$, $Y$ and $X_k$ in Fig.16c are equal respectively to the distances $d_i$, $d_y$ and $d_k$. $d_i$, $d_y$ and $d_k$ are the distances from $T_j$ to the virtual images of $X_i$, $Y$ and $X_k$. Using the fact that the area of triangle $\Delta T_j X"_i X"_k$ is equal to the sum of areas of $\Delta T_j X"_i Y'$ and $\Delta T_j Y'X"_k$, we can write:

$$d_y = \frac{d_i d_k sin(\Delta\alpha_1 + \Delta\alpha_2)}{d_i sin(\Delta\alpha_1) + d_k sin(\Delta\alpha_2)}. \qquad (10)$$

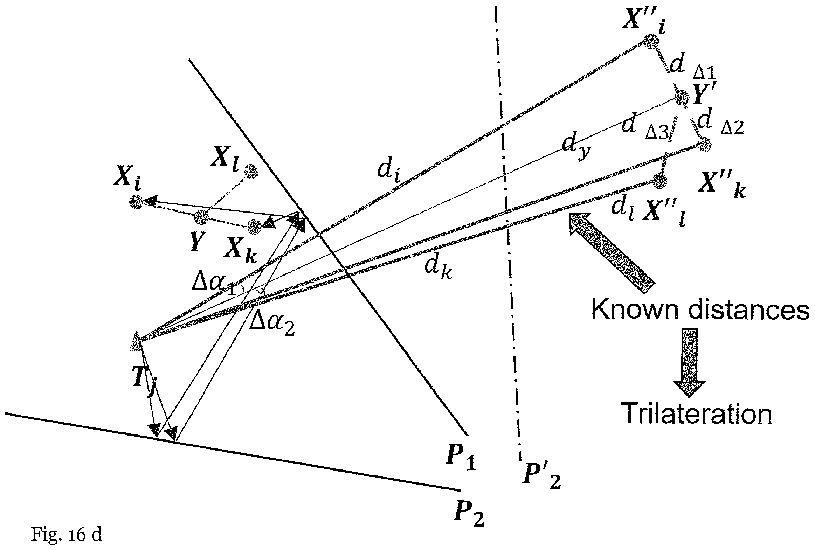

Equation (10) shows that the propagation path length $d_y$ can be calculated precisely if all the other information in the geometry is known. However, only the signal propagation distances are recorded and stored in the map. Therefore, the angles $\Delta_{\alpha 1}$ and $\Delta_{\alpha 2}$ in Eq. (10) and Fig. 16c may not be known in a practical scenario. In that case, if the distance $d_l$ to a third point $\boldsymbol{X''_l}$ is known, $d_y$ can still be calculated precisely. Distances between points and lengths of line segments remain constant after reflection. That is, $\boldsymbol{X_i X_k} = \boldsymbol{X''_i X''_k}$, $\boldsymbol{X_i X_l} = \boldsymbol{X''_i X''_l}$ and $\boldsymbol{X_k X_l} = \boldsymbol{X''_k X''_l}$. Trilateration is a mathematical approach that can be used to estimate the coordinates of a point, the distances to which from three or more other points, with known coordinates, are known. $d_y$ can be precisely calculated the following way. The coordinates of the transmitter $T_j$ are assumed to be (o,o,o). The coordinates of $\boldsymbol{X''_l}$ can then be set to $(d_l,\text{o},\text{o})$. Now, $\boldsymbol{X''_l X''_i X''_k}$ is a triangle which is uniquely defined by the lengths of its sides, which are known. The orientation of the triangle in the set up coordinate system is initially unknown, but can be partially fixed by using the distances $d_i$ and $d_k$. After the constraints set by $d_k$ and $d_i$ are applied, the triangle is still free to rotate around the line $\boldsymbol{T_j X''_l}$. However, this rotation does not alter the value of $d_y$. Coordinates can be chosen for $\boldsymbol{X''_i}$ and $\boldsymbol{X''_k}$ that fulfill the above conditions. The coordinates of $\boldsymbol{Y'}$ in the chosen coordinate frame can be calculated using trilateration from the positions of $\boldsymbol{X''_l}$, $\boldsymbol{X''_i}$ and $\boldsymbol{X''_k}$ and the distances from the points to $\boldsymbol{Y'}$. Once the coordinates of $\boldsymbol{Y'}$ are known, the distance $d_y$ is straightforward to calculate, as schematically illustrated in Fig. 16d.

## Privacy Protection

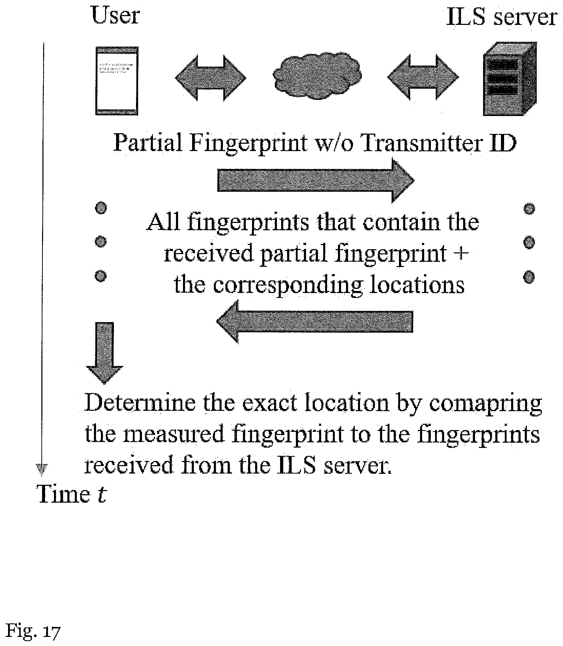

Another advantage of the approach according to the invention is the possibility of providing enhanced privacy protection, as will now be described for the example illustrated in the flow diagram of Fig. 17. In particular, the user may shield his true location from an indoor localization server storing the localization map by means of partial fingerprints.

A partial fingerprint is composed of one or multiple distances in the measured MDP-based fingerprint. The user does not inform the server what APs the measured propagation distances correspond to. In this way, the server cannot determine even an approximate location of the user. The server then returns all the fingerprints in the map that can be matched to the partial fingerprint provided by the user. The user now runs the MCA algorithm on the measured fingerprint and the reference fingerprints sent by the ILS server. Since the reference fingerprints that match the partial fingerprint will be more or less evenly distributed throughout the map, it is much harder for the server to identify movement patterns among the fingerprints. In the proposed scheme, the server cannot know from which APs the partial fingerprint was measured. Therefore, it will not know in which part of the building the user is located. This is especially useful if the ILS contains maps for several buildings.

Another privacy protection scheme involves a user that sends multiple propagation components to the server. Some of these transmitted fingerprints may correspond to real extracted propagation components, whereas the rest may be artificially generated.

The server can then not know which of the transmitted fingerprints corresponds to the user's location. In return, the user may receive from the server a list of candidate locations, and may determine the true location locally from these candidate locations and knowledge about the partial fingerprints.

However, movement of the user may still give the server a chance to be able to identify the location of the user based on a proximity of a pair of old and new fingerprints. The privacy may be further enhanced with an algorithm that may compute the imaginary fingerprints such that they appear to have a natural movement pattern. Corresponding techniques have been described by A. Konstantinidis et al., "Privacy-Preserving Indoor Localization on Smartphones", IEEE 32nd International Conference on Data Engineering, Vol. 27 No. 11 (2016) pages 1470/1471.

The techniques of the present invention based on extracted components allow for a particularly efficient computation or updating of camouflage fingerprints.

The description of the preferred embodiments and the Figures merely serve to illustrate the invention, but should not be construed to imply any limitation. The scope of the invention is to be determined based on the appended claims.

## Reference Signs

| | |
|---|---|
| 10, 10', 10" | localization environment |
| 12a - 12d | walls of localization environment 10,10' |
| 14 | obstacle in localization environment 10' |
| 16 | system for generating a localization map |
| 18 | receiver unit |
| 20 | electromagnetic signal |
| 22 | extraction unit |
| 24 | map unit |

| 26 | database |
|---|---|
| 28, 28' | client system |
| 30 | client receiver unit |
| 32 | electromagnetic signal |
| 34 | extraction unit |
| 36 | client comparison unit |
| 38 | client localization unit |
| 40 | server system |
| 42 | server receiver unit |
| 44 | server analysis unit |

**Claims**

1. A tracking method, comprising:

receiving, from a client (28'), a plurality of propagation components corresponding to a plurality of propagation paths ($d_j$), said propagation components being extracted from an electromagnetic signal (32) received by said client (28') at a location from at least one electromagnetic emitter ($T_j$);
comparing said received propagation components with a plurality of pre-stored propagation components associated with a plurality of known locations;
determining information pertaining to said location of said client (28') based on said comparison; and
providing said information to said client (28');

**characterized in that**

said comparison comprises generating a plurality of similarity metrics corresponding to said plurality of known locations, wherein
generating a similarity metric of said plurality of similarity metrics corresponding to a known location of said plurality of known locations comprises matching said received propagation components to pre-stored propagation components associated with said known location based on a similarity threshold ($\varepsilon$), wherein for every received propagation component, a best match value is selected from said pre-stored propagation components associated with said known location and said best match value and said received propagation component are considered matched if an absolute value of a difference between said best match value and said received propagation component is less than said similarity threshold ($\varepsilon$).

2. The method according to claim 1, wherein extracting said propagation components comprises identifying a plurality of peaks or shapes corresponding to said plurality of propagation paths.

3. The method according to claim 1 or 2, wherein said received propagation components are a plurality of modified or obscured propagation components obtained by said client (28') by modifying or obscuring at least a part of the plurality of propagation components extracted from the electromagnetic signal (32) received by said client (28').

4. A tracking method, comprising:

receiving, at a location, an electromagnetic signal (32) corresponding to a plurality of propagation paths ($d_j$) of signals emitted from at least one electromagnetic emitter (Tj);
extracting, from said electromagnetic signal (32), a plurality of propagation components corresponding to said plurality of propagation paths ($d_j$);
providing said extracted propagation components for comparison with a plurality of pre-stored propagation components associated with a plurality of known locations, wherein said comparison comprises generating a plurality of similarity metrics corresponding to said plurality of known locations, wherein generating a similarity metric of said plurality of similarity metrics corresponding to a known location of said plurality of known locations comprises matching said extracted propagation components to pre-stored propagation components associated with said known location based on a similarity threshold ($\varepsilon$), wherein for every extracted propagation component, a best match value is selected from said pre-stored propagation components associated with said known location and said best match value and said extracted propagation component are considered matched if an absolute value of a difference between said best match value and said extracted propagation component is less than

said similarity threshold ($\varepsilon$); and

receiving information pertaining to said location, said information being based on said comparison.

5. The method according to claim 4, further comprising determining said location from said plurality of known locations based on a comparison of said similarity metrics.

6. The method according to claim 5, further comprising:

modifying or obscuring at least a part of said extracted propagation components;

locally storing data relating to said modified or obscured propagation components;

providing said modified or obscured propagation components to at least one server (40);

receiving said information pertaining to said location from said at least one server (40);

determining said location based on said comparison of said similarity metrics and said locally stored data.

7. The method according to claim 6, wherein said modified or obscured propagation components do not allow said at least one server to fully identify or determine said location.

8. The method according to claim 6 or 7, wherein said at least one electromagnetic emitter is a plurality of electromagnetic emitters and said obscuring involves randomly switching or permuting identities of said electromagnetic emitters or providing said extracted propagation components without information pertaining to an identity of said electromagnetic emitters.

9. The method according to any one of claim 6 to 8, wherein said obscuring involves adding artificial camouflage propagation components.

10. A computer program comprising computer-readable instructions, such that said instructions, when read by a computer device, cause said computer device to implement a method according to any one of the preceding claims.

11. A server system (40), comprising:

a server receiver unit (42) adapted to receive, from a client (28'), a plurality of propagation components corresponding to a plurality of propagation paths ($d_j$), said propagation components being extracted from an electromagnetic signal (32) received by said client (28') at a location from at least one electromagnetic emitter (Tj);

a server analysis unit (44) adapted to compare said received propagation components with a plurality of pre-stored propagation components associated with a plurality of known locations;

wherein said server analysis unit (44) is adapted to determine information pertaining to a location of said client (28') based on said comparison; and

wherein said server analysis unit (44) is adapted to provide said information to said client (28')

**characterized in that**

said comparison comprises generating a plurality of similarity metrics corresponding to said plurality of known locations, wherein

generating a similarity metric of said plurality of similarity metrics corresponding to a known location of said plurality of known locations comprises matching said received propagation components to pre-stored propagation components associated with said known location based on a similarity threshold ($\varepsilon$), wherein for every received propagation component, a best match value is selected from said pre-stored propagation components associated with said known location and said best match value and said received propagation component are considered matched if an absolute value of a difference between said best match value and said received propagation component is less than said similarity threshold ($\varepsilon$).

12. The server system (40) according to claim 11, further comprising a server localization unit (44) adapted to determine said location of said client (28'), wherein said location is in particular determined as a selected location among said plurality of known locations based on a comparison of said similarity metrics.

13. A client system (28, 28'), comprising:

a client receiver unit (30) adapted to receive, at a location, an electromagnetic signal (32) corresponding to a plurality of propagation paths ($d_j$) of signals emitted from at least one electromagnetic emitter ($T_j$); and an extraction unit (34) adapted to extract, from said electromagnetic signal (32), a plurality of propagation components corresponding to said plurality of propagation paths ($d_j$);

wherein said client system (28, 28') is adapted to

provide said extracted propagation components for comparison with a plurality of pre-stored propagation components associated with a plurality of known locations, wherein said comparison comprises generating a plurality of similarity metrics corresponding to said plurality of known locations, wherein generating a similarity metric of said plurality of similarity metrics corresponding to a known location of said plurality of known locations comprises matching said extracted propagation components to pre-stored propagation components associated with said known location based on a similarity threshold ($\varepsilon$), wherein for every extracted propagation component, a best match value is selected from said pre-stored propagation components associated with said known location and said best match value and said extracted propagation component are considered matched if an absolute value of a difference between said best match value and said extracted propagation component is less than said similarity threshold ($\varepsilon$); and
receive information pertaining to said location, said information being based on said comparison.

14. The client system of claim 13, wherein said client system (28, 28') is further adapted to determine said location from said plurality of known locations based on a comparison of said similarity metrics.

15. The client system (28, 28') according to claim 14, wherein the client system (28, 28') is further adapted to:

modify or obscure at least a part of said extracted propagation components;
locally store data relating to said modified or obscured propagation components;
provide said modified or obscured propagation components to at least one server (40) for comparison with a plurality of pre-stored propagation components associated with a plurality of known locations; and
determine said location based on said comparison of said similarity metrics and said locally stored data.

**Patentansprüche**

1. Tracking-Verfahren, umfassend:

Empfangen, von einem Client (28'), einer Mehrzahl von Propagationskomponenten, die einer Mehrzahl von Propagationspfaden ($d_j$) entsprechen, wobei die Propagationskomponenten aus einem elektromagnetischen Signal (32), das von dem Client (28') an einer Position von mindestens einem elektromagnetischen Emitter ($T_j$) empfangen wurde, extrahiert wurden;
Vergleichen der empfangenen Propagationskomponenten mit einer Mehrzahl von im Voraus gespeicherten Propagationskomponenten, die mit einer Mehrzahl von bekannten Positionen verknüpft sind;
Bestimmen von Information betreffend der Position des Clients (28') basierend auf dem Vergleich; und
Bereitstellen der Information für den Client (28');

**dadurch gekennzeichnet, dass**

der Vergleich das Erzeugen einer Mehrzahl von Ähnlichkeitsmetriken, die der Mehrzahl von bekannten Positionen entsprechen, umfasst, wobei
das Erzeugen einer Ähnlichkeitsmetrik der Mehrzahl von Ähnlichkeitsmetriken, die einer bekannten Position der Mehrzahl von bekannten Positionen entspricht, ein Abgleichen der empfangenen Propagationskomponenten mit im Voraus gespeicherten Propagationskomponenten, die mit der bekannten Position verknüpft sind, basierend auf einem Ähnlichkeitsgrenzwert ($\varepsilon$) umfasst, wobei für jede empfangene Propagationskomponente ein Wert mit der besten Übereinstimmung aus den im Voraus gespeicherten Propagationskomponenten, die mit der bekannten Position verknüpft sind, ausgewählt wird und der Wert mit der besten Übereinstimmung und die empfangene Propagationskomponente als übereinstimmend betrachtet werden, wenn ein Absolutwert einer Differenz zwischen dem Wert mit der besten Übereinstimmung und der empfangenen Propagationskomponente kleiner als der Ähnlichkeitsgrenzwert ($\varepsilon$) ist.

2. Verfahren nach Anspruch 1, wobei das Extrahieren der Propagationskomponenten ein Identifizieren einer Mehrzahl von Spitzen oder Formen, die der Mehrzahl von Propagationspfaden entsprechen, umfasst.

3. Verfahren nach Anspruch 1 oder 2, wobei die empfangenen Propagationskomponenten eine Mehrzahl von modifizierten oder verschleierten Propagationskomponenten sind, die von dem Client (28') durch ein Modifizieren oder ein Verschleiern von mindestens einem Teil der Mehrzahl von Propagationskomponenten, die aus dem von dem Client (28') empfangenen elektromagnetischen Signal (32) extrahiert wurden, erhalten wurden.

4. Tracking-Verfahren, umfassend:

Empfangen, an einer Position, eines elektromagnetischen Signals (32), das einer Mehrzahl von Propagationspfaden ($d_j$) von Signalen, die von mindestens einem elektromagnetischen Emitter ($T_j$) emittiert wurden, entspricht;
Extrahieren, aus dem elektromagnetischen Signal (32), einer Mehrzahl von Propagationskomponenten, die der Mehrzahl von Propagationspfaden ($d_j$) entsprechen;
Bereitstellen der extrahierten Propagationskomponenten für einen Vergleich mit einer Mehrzahl von im Voraus gespeicherten Propagationskomponenten, die mit einer Mehrzahl von bekannten Positionen verknüpft sind, wobei der Vergleich ein Erzeugen einer Mehrzahl von Ähnlichkeitsmetriken, die der Mehrzahl von bekannten Positionen entsprechen, umfasst, wobei das Erzeugen einer Ähnlichkeitsmetrik der Mehrzahl von Ähnlichkeitsmetriken, die einer bekannten Position der Mehrzahl von bekannten Positionen entspricht, ein Abgleichen der extrahierten Propagationskomponenten mit im Voraus gespeicherten Propagationskomponenten, die mit der bekannten Position verknüpft sind, basierend auf einem Ähnlichkeitsgrenzwert ($\varepsilon$) umfasst, wobei für jede extrahierte Propagationskomponente ein Wert mit der besten Übereinstimmung aus den im Voraus gespeicherten Propagationskomponenten, die mit der bekannten Position verknüpft sind, ausgewählt wird und der Wert mit der besten Übereinstimmung und die extrahierte Propagationskomponente als übereinstimmend betrachtet werden, wenn ein Absolutwert einer Differenz zwischen dem Wert mit der besten Übereinstimmung und der extrahierten Propagationskomponente kleiner als der Ähnlichkeitsgrenzwert ($\varepsilon$) ist; und
Empfangen von Information betreffend der Position, wobei die Information auf dem Vergleich basiert.

5. Verfahren nach Anspruch 4, ferner umfassend ein Bestimmen der Position aus der Mehrzahl von bekannten Positionen basierend auf einem Vergleich der Ähnlichkeitsmetriken.

6. Verfahren nach Anspruch 5, ferner umfassend:

Modifizieren oder Verschleiern von mindestens einem Teil der extrahierten Propagationskomponenten;
lokales Speichern von Daten mit Bezug zu den modifizierten oder verschleierten Propagationskomponenten;
Bereitstellen der modifizierten oder verschleierten Propagationskomponenten für mindestens einen Server (40);
Empfangen der Information betreffend der Position von dem mindestens einen Server (40);
Bestimmen der Position basierend auf dem Vergleich der Ähnlichkeitsmetriken und den lokal gespeicherten Daten.

7. Verfahren nach Anspruch 6, wobei die modifizierten oder verschleierten Propagationskomponenten es dem mindestens einen Server nicht ermöglichen, die Position vollständig zu identifizieren oder zu bestimmen.

8. Verfahren nach Anspruch 6 oder 7, wobei der mindestens eine elektromagnetische Emitter eine Mehrzahl von elektromagnetischen Emittern ist und das Verschleiern ein zufälliges Wechseln oder Vertauschen von Identitäten der elektromagnetischen Emitter oder ein Bereitstellen der extrahierten Propagationskomponenten ohne Information betreffend einer Identität der elektromagnetischen Emitter umfasst.

9. Verfahren nach einem der Ansprüche 6 bis 8, wobei das Verschleiern ein Hinzufügen von künstlichen Tarnungspropagationskomponenten umfasst.

10. Computerprogramm mit computerlesbaren Anweisungen, so dass die Anweisungen, wenn die Anweisungen von einer Computer-Vorrichtung gelesen werden, die Computer-Vorrichtung dazu veranlassen, ein Verfahren nach einem der vorhergehenden Ansprüche zu auszuführen.

11. Server-System (40), umfassend:

eine Server-Empfänger-Einheit (42), die dazu eingerichtet ist, von einem Client (28') eine Mehrzahl von Propagationskomponenten, die einer Mehrzahl von Propagationspfaden ($d_j$) entsprechen, zu empfangen, wobei die Propagationskomponenten aus einem elektromagnetischen Signal (32), das von dem Client (28') an einer Position von mindestens einem elektromagnetischen Emitter empfangen wurde, extrahiert wurden;

eine Server-Analyse-Einheit (44), die dazu eingerichtet ist, die empfangenen Propagationskomponenten mit einer Mehrzahl von im Voraus gespeicherten Propagationskomponenten, die mit einer Mehrzahl von bekannten Positionen verknüpft sind, zu vergleichen;

wobei die Server-Analyse-Einheit (44) dazu eingerichtet ist, Information betreffend einer Position des Clients (28') basierend auf dem Vergleich zu bestimmen;

und

wobei die Server-Analyse-Einheit (44) dazu eingerichtet ist, die Information für den Client (28') bereitzustellen;

**dadurch gekennzeichnet, dass**

der Vergleich ein Erzeugen einer Mehrzahl von Ähnlichkeitsmetriken, die der Mehrzahl von bekannten Positionen entsprechen, umfasst, wobei

das Erzeugen einer Ähnlichkeitsmetrik der Mehrzahl von Ähnlichkeitsmetriken, die einer bekannten Position der Mehrzahl von bekannten Positionen entspricht, ein Abgleichen der empfangenen Propagationskomponenten mit im Voraus gespeicherten Propagationskomponenten, die mit der bekannten Position verknüpft sind, basierend auf einem Ähnlichkeitsgrenzwert ($\varepsilon$) umfasst, wobei für jede empfangene Propagationskomponente ein Wert mit der besten Übereinstimmung aus den im Voraus gespeicherten Propagationskomponenten, die mit der bekannten Position verknüpft sind, ausgewählt wird und der Wert mit der besten Übereinstimmung und die empfangene Propagationskomponente als übereinstimmend betrachtet werden, wenn ein Absolutwert einer Differenz zwischen dem Wert mit der besten Übereinstimmung und der empfangenen Propagationskomponente kleiner als der Ähnlichkeitsgrenzwert ($\varepsilon$) ist.

12. Server-System (40) nach Anspruch 11, ferner umfassend eine Server-Lokalisierungs-Einheit (44), die dazu eingerichtet ist, die Position des Clients (28') zu bestimmen, wobei die Position insbesondere als eine ausgewählte Position unter der Mehrzahl von bekannten Positionen basierend auf einem Vergleich der Ähnlichkeitsmetriken bestimmt wird.

13. Client-System (28, 28'), umfassend:

eine Client-Empfänger-Einheit (30), die dazu eingerichtet ist, an einer Position ein elektromagnetisches Signal (32) zu empfangen, das einer Mehrzahl von Propagationspfaden ($d_j$) von Signalen, die von mindestens einem elektromagnetischen Emitter ($T_j$) emittiert werden, entspricht; und

eine Extraktions-Einheit (34), die dazu eingerichtet ist, aus dem elektromagnetischen Signal (32) eine Mehrzahl von Propagationskomponenten, die der Mehrzahl von Propagationspfaden ($d_j$) entsprechen, zu extrahieren;

wobei das Client-System (28,28') dazu eingerichtet ist,

die extrahierten Propagationskomponenten für einen Vergleich mit einer Mehrzahl von im Voraus gespeicherten Propagationskomponenten, die mit einer Mehrzahl von bekannten Positionen verknüpft sind, bereitzustellen, wobei der Vergleich ein Erzeugen einer Mehrzahl von Ähnlichkeitsmetriken, die der Mehrzahl von bekannten Positionen entsprechen, umfasst, wobei das Erzeugen einer Ähnlichkeitsmetrik der Mehrzahl von Ähnlichkeitsmetriken, die einer bekannten Position der Mehrzahl von bekannten Positionen entspricht, ein Abgleichen der extrahierten Propagationskomponenten mit im Voraus gespeicherten Propagationskomponenten, die mit der bekannten Position verknüpft sind, basierend auf einem Ähnlichkeitsgrenzwert ($\varepsilon$) umfasst, wobei für jede extrahierte Propagationskomponente ein Wert mit der besten Übereinstimmung aus den im Voraus gespeicherten Propagationskomponenten, die mit der bekannten Position verknüpft sind, ausgewählt wird und der Wert mit der besten Übereinstimmung und die extrahierte Propagationskomponente als übereinstimmend betrachtet werden, wenn ein Absolutwert einer Differenz zwischen dem Wert mit der besten Übereinstimmung und der extrahierten Propagationskomponente kleiner als der Ähnlichkeitsgrenzwert ($\varepsilon$) ist; und

Information betreffend der Position zu empfangen, wobei die Information auf dem Vergleich basiert.

14. Client-System nach Anspruch 13, wobei das Client-System (28, 28') ferner dazu eingerichtet ist, die Position aus der Mehrzahl von bekannten Positionen basierend auf einem Vergleich der Ähnlichkeitsmetriken zu bestimmen.

15. Client-System (28, 28') nach Anspruch 14, wobei das Client-System (28, 28') ferner dazu eingerichtet ist:

mindestens einen Teil der extrahierten Propagationskomponenten zu modifizieren oder zu verschleiern; Daten mit Bezug zu den modifizierten oder verschleierten Propagationskomponenten lokal zu speichern; die modifizierten oder verschleierten Propagationskomponenten mindestens einem Server (40) für einen Vergleich mit einer Mehrzahl von im Voraus gespeicherten Propagationskomponenten, die mit einer Mehrzahl von bekannten Positionen verknüpft sind, bereitzustellen; und die Position basierend auf dem Vergleich der Ähnlichkeitsmetriken und den lokal gespeicherten Daten zu bestimmen.

## Revendications

1. Procédé de suivi, comprenant les étapes ci-dessous consistant à :

recevoir, en provenance d'un dispositif client (28'), une pluralité de composantes de propagation correspondant à une pluralité de trajets de propagation ($d_j$), lesdites composantes de propagation étant extraites d'un signal électromagnétique (32), reçu par ledit dispositif client (28') à un emplacement, en provenance d'au moins un émetteur électromagnétique ($T_j$) ; comparer lesdites composantes de propagation reçues à une pluralité de composantes de propagation pré-stockées associées à une pluralité d'emplacements connus ; déterminer des informations relatives audit emplacement dudit dispositif client (28') sur la base de ladite étape de comparaison ; et fournir lesdites informations audit dispositif client (28') ;

**caractérisé en ce que :**
ladite étape de comparaison comprend l'étape consistant à générer une pluralité de métriques de similarité correspondant à ladite pluralité d'emplacements connus, dans laquelle :
l'étape de génération d'une métrique de similarité de ladite pluralité de métriques de similarité correspondant à un emplacement connu de ladite pluralité d'emplacements connus comprend l'étape consistant à mettre en correspondance lesdites composantes de propagation reçues avec des composantes de propagation pré-stockées associées audit emplacement connu sur la base d'un seuil de similarité ($\varepsilon$), dans lequel, pour chaque composante de propagation reçue, une valeur de meilleure correspondance est sélectionnée parmi lesdites composantes de propagation pré-stockées associées audit emplacement connu, et ladite valeur de meilleure correspondance et ladite composante de propagation reçue sont considérées comme étant mises en correspondance si une valeur absolue d'une différence entre ladite valeur de meilleure correspondance et ladite composante de propagation reçue est inférieure audit seuil de similarité ($\varepsilon$).

2. Procédé selon la revendication 1, dans lequel l'étape d'extraction desdites composantes de propagation comprend l'étape consistant à identifier une pluralité de pics ou de formes correspondant à ladite pluralité de trajets de propagation.

3. Procédé selon la revendication 1 ou 2, dans lequel lesdites composantes de propagation reçues correspondent à une pluralité de composantes de propagation modifiées ou obscurcies obtenues par ledit dispositif client (28') en modifiant ou en obscurcissant au moins une partie de la pluralité de composantes de propagation extraites du signal électromagnétique (32) reçu par ledit dispositif client (28').

4. Procédé de suivi, comprenant les étapes ci-dessous consistant à :

recevoir, à un emplacement donné, un signal électromagnétique (32) correspondant à une pluralité de trajets de propagation ($d_j$) de signaux émis à partir d'au moins un émetteur électromagnétique ($T_j$) ; extraire, dudit signal électromagnétique (32), une pluralité de composantes de propagation correspondant à ladite pluralité de trajets de propagation ($d_j$) ; fournir lesdites composantes de propagation extraites, en vue d'une comparaison avec une pluralité de composantes de propagation pré-stockées associées à une pluralité d'emplacements connus, dans lequel ladite étape de comparaison comprend l'étape consistant à générer une pluralité de métriques de similarité correspondant à ladite pluralité d'emplacements connus, dans lequel l'étape de génération d'une métrique de similarité de ladite pluralité de métriques de similarité correspondant à un emplacement connu de ladite pluralité d'emplacements connus comprend l'étape consistant à mettre en correspondance lesdites composantes de propagation extraites avec des composantes de propagation pré-stockées associées audit emplacement connu, sur la base d'un seuil de similarité ($\varepsilon$), dans lequel, pour chaque composante de propagation extraite, une valeur de meilleure correspondance est sélectionnée parmi lesdites composantes de propagation pré-stockées associées audit emplacement connu, et ladite valeur de meilleure correspondance et ladite composante de propagation extraite sont considérées comme étant mises en correspondance si une valeur absolue d'une différence entre ladite valeur de meilleure correspondance et ladite composante de propagation extraite est inférieure audit seuil de similarité ($\varepsilon$) ; et

recevoir des informations relatives audit emplacement, lesdites informations étant basées sur ladite comparaison.

**5.** Procédé selon la revendication 4, comprenant en outre l'étape consistant à déterminer ledit emplacement à partir de ladite pluralité d'emplacements connus, sur la base d'une comparaison desdites métriques de similarité.

**6.** Procédé selon la revendication 5, comprenant en outre les étapes ci-dessous consistant à :

modifier ou obscurcir au moins une partie desdites composantes de propagation extraites ;
stocker localement des données relatives auxdites composantes de propagation modifiées ou obscurcies ;
fournir lesdites composantes de propagation modifiées ou obscurcies à au moins un serveur (40) ;
recevoir lesdites informations relatives audit emplacement en provenance dudit au moins un serveur (40) ;
déterminer ledit emplacement sur la base de ladite étape de comparaison desdites métriques de similarité et desdites données stockées localement.

**7.** Procédé selon la revendication 6, dans lequel lesdites composantes de propagation modifiées ou obscurcies ne permettent pas audit au moins un serveur d'identifier ou de déterminer complètement ledit emplacement.

**8.** Procédé selon la revendication 6 ou 7, dans lequel ledit au moins un émetteur électromagnétique correspond à une pluralité d'émetteurs électromagnétiques, et ladite étape d'obscurcissement implique l'étape consistant à commuter ou permuter de manière aléatoire des identités desdits émetteurs électromagnétiques ou à fournir lesdites composantes de propagation extraites sans information relative à une identité desdits émetteurs électromagnétiques.

**9.** Procédé selon l'une quelconque des revendications 6 à 8, dans lequel ladite étape d'obscurcissement implique l'étape consistant à ajouter des composantes de propagation par camouflage artificiel.

**10.** Programme informatique comprenant des instructions lisibles par ordinateur, de sorte que lesdites instructions, lorsqu'elles sont lues par un dispositif informatique, amènent ledit dispositif informatique à mettre en œuvre un procédé selon l'une quelconque des revendications précédentes.

**11.** Système de serveur (40), comprenant :

une unité de réception de serveur (42) apte à recevoir, en provenance d'un dispositif client (28'), une pluralité de composantes de propagation correspondant à une pluralité de trajets de propagation ($d_j$), lesdites composantes de propagation étant extraites d'un signal électromagnétique (32) reçu par ledit dispositif client (28'), à un emplacement donné, en provenance d'au moins un émetteur électromagnétique ($T_j$) ;
une unité d'analyse de serveur (44) apte à comparer lesdites composantes de propagation reçues à une pluralité de composantes de propagation pré-stockées associées à une pluralité d'emplacements connus ;
dans lequel ladite unité d'analyse de serveur (44) est apte à déterminer des informations relatives à un emplacement dudit dispositif client (28') sur la base de ladite comparaison ; et
dans lequel ladite unité d'analyse de serveur (44) est apte à fournir lesdites informations audit dispositif client (28') ;

**caractérisé en ce que :**
ladite étape de comparaison comprend l'étape consistant à générer une pluralité de métriques de similarité correspondant à ladite pluralité d'emplacements connus, dans laquelle :
l'étape de génération d'une métrique de similarité de ladite pluralité de métriques de similarité correspondant à un emplacement connu de ladite pluralité d'emplacements connus comprend l'étape consistant à mettre en correspondance lesdites composantes de propagation reçues avec des composantes de propagation pré-stockées associées audit emplacement connu sur la base d'un seuil de similarité ($\varepsilon$), dans lequel, pour chaque composante de propagation reçue, une valeur de meilleure correspondance est sélectionnée parmi lesdites composantes de propagation pré-stockées associées audit emplacement connu, et ladite valeur de meilleure correspondance et ladite composante de propagation reçue sont considérées comme étant mises en correspondance si une valeur absolue d'une différence entre ladite valeur de meilleure correspondance et ladite composante de propagation reçue est inférieure audit seuil de similarité ($\varepsilon$).

**12.** Système de serveur (40) selon la revendication 11, comprenant en outre une unité de localisation de serveur (44) apte à déterminer ledit emplacement dudit dispositif client (28'), dans lequel ledit emplacement est en particulier déterminé comme étant un emplacement sélectionné parmi ladite pluralité d'emplacements connus, sur la base d'une comparaison desdites métriques de similarité.

**13.** Système client (28, 28'), comprenant :

une unité de réception de dispositif client (30) apte à recevoir, à un emplacement donné, un signal électromagnétique (32) correspondant à une pluralité de trajets de propagation ($d_j$) de signaux émis à partir d'au moins un émetteur électromagnétique ($T_j$) ; et
une unité d'extraction (34) apte à extraire, dudit signal électromagnétique (32), une pluralité de composantes de propagation correspondant à ladite pluralité de trajets de propagation ($d_j$) ;

dans lequel ledit système client (28, 28') est apte à :

fournir lesdites composantes de propagation extraites en vue d'une comparaison à une pluralité de composantes de propagation pré-stockées associées à une pluralité d'emplacements connus, dans lequel ladite étape de comparaison comprend l'étape consistant à générer une pluralité de métriques de similarité correspondant à ladite pluralité d'emplacements connus, dans lequel l'étape de génération d'une métrique de similarité de ladite pluralité de métriques de similarité correspondant à un emplacement connu de ladite pluralité d'emplacements connus comprend l'étape consistant à mettre en correspondance lesdites composantes de propagation extraites avec des composantes de propagation pré-stockées associées audit emplacement connu, sur la base d'un seuil de similarité ($\varepsilon$), dans lequel, pour chaque composante de propagation extraite, une valeur de meilleure correspondance est sélectionnée parmi lesdites composantes de propagation pré-stockées associées audit emplacement connu, et ladite valeur de meilleure correspondance et ladite composante de propagation extraite sont considérées comme étant mises en correspondance si une valeur absolue d'une différence entre ladite valeur de meilleure correspondance et ladite composante de propagation extraite est inférieure audit seuil de similarité ($\varepsilon$) ; et
recevoir des informations relatives audit emplacement, lesdites informations étant basées sur ladite comparaison.

**14.** Système client selon la revendication 13, dans lequel ledit système client (28, 28') est en outre apte à déterminer ledit emplacement à partir de ladite pluralité d'emplacements connus, sur la base d'une comparaison desdites métriques de similarité.

**15.** Système client (28, 28') selon la revendication 14, dans lequel le système client (28, 28') est en outre apte à :

modifier ou obscurcir au moins une partie desdites composantes de propagation extraites ;
stocker localement des données relatives auxdites composantes de propagation modifiées ou obscurcies ;
fournir lesdites composantes de propagation modifiées ou obscurcies à au moins un serveur (40), en vue d'une comparaison à une pluralité de composantes de propagation pré-stockées associées à une pluralité d'emplacements connus ; et
déterminer ledit emplacement sur la base de ladite comparaison desdites métriques de similarité et desdites données stockées localement.

Fig. 1

Fig. 2

Physical Layer Operations

OFDM Demodulation → Demodulation

Received Packets → Data Link Layer

Received Analog Signal $r(t)$ →

Forward Error correction

Extract Multipath Delays

$d_{11}..d_{MK}$

Multipath Delays

MCA → Receiver Location $X$

Physical Layer Data

Fig. 3

EP 3 441 782 B1

$d_{j_3}$

$d_{j_4}$

$d_{j_5}$

10'

12a

12b

12c

12d

14

$d_{j_2}$

$d_{j_1}$

X

$T_j$

Fig. 4

receiving, at a first location, a first electromagnetic signal corresponding to a first plurality of propagation paths between at least one electromagnetic emitter and said first location; — S10

extracting, from said first electromagnetic signal, a first plurality of propagation components corresponding to said first plurality of propagation paths; — S12

receiving, at a second location different from said first location, a second electromagnetic signal corresponding to a second plurality of propagation paths between said at least one electromagnetic emitter and said second location; — S14

extracting, from said second electromagnetic signal, a second plurality of propagation components corresponding to said second plurality of propagation paths; and — S16

associating said first plurality of propagation components with said first location and said second plurality of propagation components with said second location in a database. — S18

Fig. 5

16

26

18

20

22

24

Fig. 6

receiving, at a location, an electromagnetic signal (32) corresponding to a plurality of propagation paths ($d_j$) of signals emitted from at least one electromagnetic emitter ($T_j$); ⌐S20

extracting, from said electromagnetic signal (32), a plurality of propagation components corresponding to said plurality of propagation paths ($d_j$); ⌐S22

providing, said extracted propagation components for comparison with a plurality of pre-stored propagation components associated with a plurality of known locations; and ⌐S24

receiving information pertaining to said location, said information being based on said comparison. ⌐S26

Fig. 7

Fig. 8 a

Fig. 8 b

28'

40

42

44

Fig. 9

receiving, from a client (28'), a plurality of propagation components corresponding to a plurality of propagation paths (d$_j$), said propagation components being extracted from an electromagnetic signal (32) received by said client (28') at a location from at least one electromagnetic emitter (T$_j$);

S30

comparing said received propagation components with a plurality of pre-stored propagation components associated with a plurality of known locations;

S32

determining information pertaining to said location of said client (28') based on said comparison; and

S34

providing said information to said client (28,).

S36

Fig. 10

Fig. 11 a

Fig. 11 b

Fig. 12 a
Fig. 12 b
Fig. 12 c
Fig. 13 a
Fig. 13 b
Fig. 13 c

Fig. 14 a

Fig. 14 b

Fig. 14 c

MAP:

Fig. 15 a

$$\mathbf{D} = \left\{\begin{bmatrix}1.1\\2.1\\4.7\\5.5\end{bmatrix}\right\}$$

Step 1:
$d_1 = 1.1$
$\gamma(\mathbf{D}, F_2|T_1, 1) = (0.5 - 0.2)^2 = 0.09$
$\gamma(\mathbf{D}, F_3|T_1, 1) = 0.5^2 = 0.25$

Step 2:
$d_2 = 2.1$
$\gamma(\mathbf{D}, F_2|T_1, 2) += 0.3^2 = 0.18$
$\gamma(\mathbf{D}, F_1|T_1, 2) = 0.2^2 = 0.04$

Step 3:
$d_3 = 4.7$
$\gamma(\mathbf{D}, F_2|T_1, 3) += 0.3^2 = 0.27$

Step 4:
$d_4 = 5.5$
$\gamma(\mathbf{D}, F_2|T_1, 4) += (0.5 - |5.5 - 5.3|)^2 = 0.36$
$\gamma(\mathbf{D}, F_2|T_1) = 0.36$
$\gamma(\mathbf{D}, F_2) = \sum_j \gamma(\mathbf{D}, F_2|T_j) = 0.36$

MAP[1]
[1.1 − 0.5,1.1 + 0.5]
LP[1]: F_2:1.3, F_3:1.1, F_3:1.4

MAP[2]
[2.2 − 0.5, 2.2 + 0.5]
LP[1]: F_2:1.9, F_1:2.4, F_1:2.6

MAP[3]
[3.3 − 0.5,3.3 + 0.5]
LP[1]: F_3:3.5

MAP[4]
[5.0 − 0.5, 5.0 + 0.5]
LP[1]: F_2:4.5, F_2:5.3

MAP[5]
[7.1 − 0.5, 7.1 + 0.5]
LP[1]: F_2:7.1

Fig. 15 b

$$X_iO = X'_iO \qquad d_{ij_2} = T_jX'_i$$

Fig. 16 a

$X''_i$
Virtual Image of $X'_i$

Reflected Planes step 2

Original Geometry

$O_2$     $O'_2$

Reflection Axis  step 2

$d_{j_4}$

$O_1$

Reflected Planes step 1

Reflection Axis  step 1

$X_i$

$X'_i$
Virtual Image of $X_i$

$T_j$

$$O_1 O_2 = O_1 O'_2 \quad O_2 X_i = O'_2 X''_i \quad d_{j_4} = T_j X''_i$$

Fig. 16 b

Fig. 16 c

Fig. 16 d

User                            ILS server

Partial Fingerprint w/o Transmitter ID

All fingerprints that contain the
received partial fingerprint +
the corresponding locations

Determine the exact location by comapring
the measured fingerprint to the fingerprints
received from the ILS server.

Time $t$

Fig. 17

**REFERENCES CITED IN THE DESCRIPTION**

**Patent documents cited in the description**

- US 20100309051 A1
- EP 2934052 A1
- US 20130324158 A1
- US 20140301511 A1

**Non-patent literature cited in the description**

- **F. LEMIC et al.** Experimental Decomposition of the Performance of Fingerprinting-Based Localization Algorithms. *2014 International Conference on Indoor Positioning and Indoor Navigation (IPIN),* October 2014, 355-364
- **D. BARTLET.** Essentials of Positioning and Location Technology. Cambridge University Press, 2013
- **A. KONSTANTINIDIS et al.** Privacy-Preserving Indoor Localization on Smartphones. *IEEE 32nd International Conference on Data Engineering,* 2016, vol. 27 (11), 1470, , 1471